(19) **Europäisches Patentamt / European Patent Office / Office européen des brevets**

(11) **EP 3 903 240 B1**

(12) **EUROPEAN PATENT SPECIFICATION**

(45) Date of publication and mention of the grant of the patent:
**07.05.2025 Bulletin 2025/19**

(21) Application number: **20778259.0**

(22) Date of filing: **24.03.2020**

(51) International Patent Classification (IPC):
**G06N 3/082** (2023.01)    **G06N 3/0464** (2023.01)
**G06N 3/0495** (2023.01)

(52) Cooperative Patent Classification (CPC):
**G06N 3/082; G06N 3/0464; G06N 3/0495**

(86) International application number:
**PCT/KR2020/004000**

(87) International publication number:
**WO 2020/197241 (01.10.2020 Gazette 2020/40)**

(54) **DEVICE AND METHOD FOR COMPRESSING MACHINE LEARNING MODEL**

VORRICHTUNG UND VERFAHREN ZUM KOMPRIMIEREN EINES MASCHINENLERNMODELLS

DISPOSITIF ET PROCÉDÉ DE COMPRESSION DE MODÈLE D'APPRENTISSAGE AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2019 CN 201910228917**

(43) Date of publication of application:
**03.11.2021 Bulletin 2021/44**

(73) Proprietor: **Samsung Electronics Co., Ltd.**
**Suwon-si, Gyeonggi-do 16677 (KR)**

(72) Inventors:
• **A, Yong**
  **Suwon-si, Gyeonggi-do 16677 (KR)**
• **WANG, Gaofei**
  **Suwon-si, Gyeonggi-do 16677 (KR)**
• **LUO, Zhenbo**
  **Suwon-si, Gyeonggi-do 16677 (KR)**
• **YANG, Shuli**
  **Suwon-si, Gyeonggi-do 16677 (KR)**
• **SUN, Bin**
  **Suwon-si, Gyeonggi-do 16677 (KR)**
• **FU, Pei**
  **Suwon-si, Gyeonggi-do 16677 (KR)**
• **WANG, Hua**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(56) References cited:
**KR-A- 20180 043 172    US-A1- 2018 046 915**
**US-A1- 2019 057 308**

• LUO JIAN-HAO ET AL: "ThiNet: A Filter Level Pruning Method for Deep Neural Network Compression", 2017 IEEE INTERNATIONAL CONFERENCE ON COMPUTER VISION (ICCV), IEEE, 22 October 2017 (2017-10-22), pages 5068 - 5076, XP033283384, DOI: 10.1109/ICCV.2017.541
• ZHUANG ZHUANGWEI ET AL: "Discrimination-aware Channel Pruning for Deep Neural Networks", 14 January 2019 (2019-01-14), arXiv.org, pages 1 - 18, XP055853388, Retrieved from the Internet <URL:https://arxiv.org/pdf/1810.11809.pdf> [retrieved on 20211021]
• YIREN ZHOU ET AL: "Adaptive Quantization for Deep Neural Network", ARXIV.ORG, CORNELL UNIVERSITY LIBRARY, 201 OLIN LIBRARY CORNELL UNIVERSITY ITHACA, NY 14853, 4 December 2017 (2017-12-04), XP080844423

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **SHAOKAI YE ET AL: "A Unified Framework of DNN Weight Pruning and Weight Clustering/ Quantization Using ADMM", ARXIV.ORG, CORNELL UNIVERSITY LIBRARY, 201 OLIN LIBRARY CORNELL UNIVERSITY ITHACA, NY 14853, 5 November 2018 (2018-11-05), XP080934460**
- **ZHUANGWEI ZHUANG; MINGKUI TAN; BOHAN ZHUANG; JING LIU; YONG GUO; QINGYAO WU; JUNZHOU HUANG; JINHUI ZHU: "Discrimination-aware Channel Pruning for Deep Neural Networks", ARXIV.ORG, CORNELL UNIVERSITY LIBRARY, 201 OLIN LIBRARY CORNELL UNIVERSITY ITHACA, NY 14853, 28 October 2018 (2018-10-28), 201 Olin Library Cornell University Ithaca, NY 14853, XP081017584**
- **MINNEHAN BRETON; SAVAKIS ANDREAS: "Cascaded Projection: End-To-End Network Compression and Acceleration", 2019 IEEE/CVF CONFERENCE ON COMPUTER VISION AND PATTERN RECOGNITION (CVPR), IEEE, 15 June 2019 (2019-06-15), pages 10707 - 10716, XP033687276, DOI: 10.1109/CVPR.2019.01097**

## Description

### Technical Field

Example embodiments of the present disclosure relate to an electronic device, an electronic device controlling method, and a computer program product including instructions for performing the electronic device controlling method.

### Background Art

In the field of artificial intelligence, neural network technologies are widely used, and performance thereof is greatly improved as compared with conventional algorithms. With the popularity of portable devices such as mobile phones, there is an increasing demand for operating neural network models on a device side.

At present, on a device side, the neural network model is mainly applied in two manners: Cloud (which is based on cloud technologies and relies on a communication network) and On Device (which directly uses computing resources of a terminal device and does not need a network). The On Device manner has advantages as compared with the Cloud manner. Firstly, the On Device manner has better real-time performance while the Cloud manner is influenced by the network speed, which may be unable to achieve real-time effects. Secondly, under the current situation that people attach importance to privacy protection, the Cloud manner needs to upload data to a cloud, which will bring risks of leakage of private user data. However, since all calculations in the On Device manner are performed on the device side, the On Device manner has advantages in privacy protection. Thirdly, the On Device manner may provide better autonomy, as all operations are completed on the device side to make decisions without relying on operation such as external communication. Finally, the Cloud manner needs to respond to the increase of the number of devices and services, and will increase more costs by the needs to introduce better scheduling algorithms and more devices.

In J.-H. Luo, J. Wu and W. Lin, "ThiNet: A Filter Level Pruning Method for Deep Neural Network Compression," 2017 IEEE International Conference on Computer Vision (ICCV), Venice, Italy, 2017, pp. 5068-5076, a filter pruning model is disclosed that uses a greedy algorithm for identifying the channels in a model.

### Disclosure

### Technical Problem

It is not difficult to foresee that the On Device manner will become an important development direction, but at present, the neural network model often occupies a large amount of hard disk space and memory of the terminal device, and the operation speed is slow, which cannot be simply deployed on a device side.

Solution to Problem

Example embodiments provide an electronic device, an electronic device controlling method, and a computer program product including instructions for performing the electronic device controlling method.

Additional aspects will be set forth in part in the description which follows and, in part, will be apparent from the description, or may be learned by practice of the presented example embodiments of the disclosure.

The present invention is defined by the appended set of claims. According to an aspect of an example embodiment of the disclosure, there is provided an on-device method for compressing a machine learning model by an electronic device, comprising determining a pruning number for each of a plurality of channels included in a set hidden layer of the machine learning model, the machine learning model comprises a convolutional neural network that a plurality of hidden layers including the set hidden layer, the set hidden layer comprises one or more hidden layers set in respective hidden layers; determining a pruning loss of each hidden layer in the set hidden layer based on the determined pruning number of the respective channels included in each hidden layer in the set hidden layer; determining a compression parameter of the set hidden layer in the model; and compressing the model based on the determined compression parameter of the set hidden layer, wherein the compression parameter is related to a pruning of the model and comprises a pruning number of each hidden layer in the set hidden layer, and wherein the determining the compression parameter of the set hidden layer in the model is based on the pruning number of the respective channels included in each hidden layer of the set hidden layer and the pruning loss of each hidden layer in the set hidden layer of the model, the determining the compression parameter of the set hidden layer comprises determining a relationship between the pruning number of the respective channels of each hidden layer of the set hidden layer and the corresponding pruning loss of each hidden layer in the set hidden layer; determining the pruning number of each hidden layer, by solving an optimization problem based on an overall compression target and the relationship between the pruning number of respective channels of each hidden layer of the set hidden layer and the corresponding pruning loss of each hidden layer in the set hidden layer, wherein the machine learning model corresponds to at least one of a scene text detection model which detects text visible in scenes or a keypoints detection model which detects multiple pre-set key positions of a person in a scene.

The determining the relationship between the pruning number of the respective channels of each hidden layer in the set hidden layer and the corresponding pruning loss of each hidden layer, comprises determining a relationship between the pruning number of the respective channels of a current hidden layer and the corresponding pruning loss of the current hidden layer, based on training data of at least one next hidden layer to the current hidden layer, wherein the training data comprises a relationship between an output channel of the at least one next hidden layer and each input channel of the at least one next hidden layer.

The determining the pruning number of each hidden layer, based on the relationship between the pruning number of the respective channels of each hidden layer and the corresponding pruning loss of each hidden layer, comprises determining the pruning number of each hidden layer, based on a relationship between the pruning number of respective channels of each hidden layer and the corresponding pruning loss of each hidden layer, and a weight corresponding to each hidden layer.

The determining the pruning number of each hidden layer, based on the relationship between the pruning number of the respective channels of each set hidden layer in the set hidden layer and the corresponding pruning loss of each hidden layer in the set hidden layer, and the weight corresponding to each hidden layer, comprises: determining a relationship between the pruning number of the respective channels of each hidden layer and a corresponding weighted pruning loss of each hidden layer, based on the relationship between the pruning number of the respective channels of each hidden layer and the corresponding pruning loss of each hidden layer, and the weight corresponding to each hidden layer; determining the pruning number of each hidden layer, based on the relationship between the pruning number of respective channels of each hidden layer and the corresponding weighted pruning loss of each hidden layer.

The determining the relationship between the pruning number of the respective channels of each hidden layer and the corresponding pruning loss of each hidden layer, comprises calculating, using an incremental manner or a decreasing manner, the pruning loss of each current candidate channel to be pruned respectively, wherein the incremental manner includes any current candidate channel to be pruned comprising a pruning number that includes the pruning numbers of each of the pruned channels determined by a previous channel pruning number and at least one unpruned channel, wherein the decreasing manner includes any current candidate channel to be pruned comprising a pruning number that corresponds remaining pruned channels after removing at least one channel from pruned channels determined by a previous channel pruning number; determining a current candidate channel to be pruned with a minimum pruning loss as the pruned channel corresponding to the current channel determined by the previous channel pruning number, to obtain the relationship between the current channel pruning number and the corresponding pruning loss of each hidden layer in the set hidden layer.

The compression parameter comprises a quantization rate, and the determining the compression parameter of the set hidden layer in the model, comprises determining a relationship between respective candidate quantization rates of each hidden layer in the set hidden layer and corresponding quantization loss of each hidden layer; and determining a quantization rate of each hidden layer based on a relationship between respective candidate quantization rates of each hidden layer and corresponding quantization loss of each hidden layer.

The determining a relationship between respective candidate quantization rates of each hidden layer and corresponding quantization loss of each hidden layer, comprises determining the relationship between respective candidate quantization rates of each hidden layer and corresponding quantization loss of each hidden layer, based on training data of a current hidden layer; and wherein, the training data of the current hidden layer comprises a relationship between an output channel of the current hidden layer and each input channel of the current hidden layer.

The determining a quantization rate of each hidden layer based on a relationship between respective candidate quantization rates of each hidden layer and corresponding quantization loss of each hidden layer, comprises determining a quantization rate of each hidden layer based on a relationship between respective candidate quantization rates of each hidden layer and corresponding quantization loss of each hidden layer, and a weight corresponding to each hidden layer.

The determining a quantization rate of each hidden layer based on a relationship between respective candidate quantization rates of each hidden layer and corresponding quantization loss of each hidden layer, and a weight corresponding to each hidden layer, comprises determining a relationship between respective candidate quantization rates of each hidden layer and corresponding weighted quantization loss, based on the relationship between respective candidate quantization rates of each hidden layer and corresponding quantization loss, and a weight corresponding to each hidden layer; and determining a quantization rate of each hidden layer, based on the relationship between respective candidate quantization rates of each hidden layer and corresponding weighted quantization loss of each hidden layer.

If a current hidden layer corresponds one-to-one to a next hidden layer, the weight of the current hidden layer is the same as the weight of the next hidden layer; if the current hidden layer corresponds to at least two next hidden layers by a multi-out structure, the weight of the current hidden layer is the sum of the weights of at least two next hidden layers; and if at least two current hidden layers correspond to one next hidden layer by a multi-in structure, the weight of each current hidden layer is the weight of the next hidden layer allocated according to a channel proportion of each current hidden layer.

The determining a compression parameter of the set hidden layer in the model, comprises determining the compression parameter of the set hidden layer, based on a loss relationship and an overall compression target parameter of the model; wherein, if the compression parameter is a pruning number, the loss relationship comprises a relationship between the pruning number of respective channels of each hidden layer in the set hidden layer in the model and the corresponding weighted pruning loss of each hidden layer in the set hidden layer, the weighted pruning loss being a product of weights of each hidden layer and the pruning loss of each hidden layer; and if the compression parameter comprises a pruning number and a quantization rate, then the loss relationship comprises a relationship between the pruning number of respective channels of each hidden layer in the set hidden layer and the corresponding weighted pruning loss of each hidden layer in the set hidden layer, and a relationship between respective candidate quantization rates of each hidden layer in the set hidden layer and corresponding weighted quantization loss of each hidden layer the weighted pruning loss being a product of weights of each hidden layer and the pruning loss of each hidden layer and the weighted quantization loss being a product of weights of each hidden layer and a quantization loss of each hidden layer.

The overall compression target parameter comprises at least one of an overall compression rate of the model or an overall loss of the model.

The determining the compression parameter of the set hidden layer, based on a loss relationship and an overall compression target parameter of the model, comprises any one of the following: calculating a compression parameter of each set hidden layer that minimizes the overall loss of the model based on the loss relationship and the overall compression rate of the model; and calculating a compression parameter of each set hidden layer that maximizes the overall compression rate of the model based on the loss relationship and the overall loss of the model.

The method may further comprise selecting at least one of the following models as a learning model: a model before compression; a model obtained after compressing at least one hidden layer; a model after historical fine-tuning; and fine-tuning the compressed model based on the learning model to obtain an optimized model.

The fine-tuning the compressed model based on the learning model to obtain the optimized model, comprises, based on determining that the fine-tuned model does not satisfy a preset condition, repeatedly performing the step of determining the compression parameter of the set hidden layer in the model to be optimized, compressing the model to be optimized based on the compression parameter of the set hidden layer, and the step of fine-tuning the compressed model based on the learning model, until the fine-tuned model satisfies the preset condition, to obtain the optimized model.

After obtaining the optimized model, the method may further comprises splitting channels of at least one hidden layer of the optimized model into at least two groups of sub-channels respectively, and determining a network parameter of each group of sub-channels, wherein each group of sub-channels comprises corresponding input channels and output channels after grouping; adding a combination layer to obtain a group compressed model, wherein the input of the combination layer is connected to the output channel of each group of sub-channels.

In accordance with another aspect of the disclosure, provided is an electronic device, comprising an input interface; an output interface; at least one processor; and a memory storing at least one instruction, wherein the input interface is configured to receive a machine learning model to be compressed by an on-device method, wherein the at least one processor is configured to, by executing the at least one instruction, determine a pruning number for each of a plurality of channels included in a set hidden layer of the machine learning model, the machine learning model comprising a plurality of hidden layers including the set hidden layer and the set hidden layer comprising one or more hidden layers set in respective hidden layers; determine a pruning loss of each hidden layer in the set hidden layer based on the determined pruning number of the respective channels included in each hidden layer in the set hidden layer; determine a compression parameter of the set hidden layer in the model; compress the model based on the determined compression parameter of the set hidden layer, wherein the compression parameter is related to a pruning of the model and comprising a pruning number of each hidden layer in the set hidden layer, and wherein the compression parameter of the set hidden layer is determined based on the pruning number of the respective channels included in each hidden layer in the set hidden layer and the pruning loss of each hidden layer in the set hidden layer of the model, wherein the at least one processor is configured to, by executing the at least one instruction, determine a relationship between the pruning number of the respective channels of each hidden layer in the set hidden layer and the corresponding pruning loss of each hidden layer in the set hidden layer; determine the pruning number of each hidden layer, by solving an optimization problem based on an overall compression target and the relationship between the pruning number of respective channels of each hidden layer in the set hidden layer and the corresponding pruning loss of each hidden layer in the set hidden layer, wherein the machine learning model corresponds to at least one of a scene text detection model which detects text visible in scenes or a keypoints detection model which detects multiple pre-set key positions of a person in a scene.

In accordance with another aspect of the disclosure, provided is a computer readable storage medium comprising a non-transitory computer-readable storage medium storing computer program codes which, when executed by a computer, causes the computer to perform an on-device method for compressing a machine learning model.

In accordance with an aspect of the disclosure which is outside the subject-matter of the claims, provided is a method for compressing a machine learning model by an electronic device, the method comprising: determining a pruning number for each of a plurality of channels included in a hidden layer of the machine learning model; determining a pruning loss of the hidden layer based on the determined pruning numbers of the hidden layer; and determining a compression parameter of the hidden layer based on the pruning loss of hidden layer of the machine learning model; and compressing the machine learning model based on the determined compression parameter of the hidden layer. According to an aspect of an example embodiment of the disclosure, the compression parameter is related to a pruning of the machine learning model.

According to an aspect of the disclosure, the machine learning model comprises a plurality of hidden layers, including the hidden layer, the compression parameter comprises a pruning number of each of the hidden layers, and the determining the compression parameter of the hidden layer in the machine learning model, comprises: determining a relationship between the pruning number of respective channels of each of the hidden layers and the corresponding pruning loss of each of the hidden layers; determining the pruning number of each of the hidden layers, based on the relationship between the pruning number of the respective channels and the corresponding pruning loss of each of the hidden layers.

According to an aspect of an example embodiment of the disclosure, the determining the relationship between the pruning number of the respective channels of each of the hidden layers and the corresponding pruning loss of each of the hidden layers, comprises: determining a relationship between the pruning number of the respective channels of a current hidden layer and the corresponding pruning loss of the current hidden layer, based on training data of at least one next hidden layer next to the current hidden layer; wherein the training data comprises a relationship between an output channel of the at least one next hidden layer and each input channel of the at least one next hidden layer.

According to an aspect of an example embodiment of the disclosure, the determining the pruning number of each of the hidden layers, based on the relationship between the pruning number of the respective channels of each of the hidden layers and the corresponding pruning loss of each of the hidden layers, comprises: determining the pruning number of each of the hidden layers, based on the relationship between the pruning number of the respective channels of each of the hidden layers and the corresponding pruning loss of each of the hidden layers, and a respective weight of each of the hidden layers.

According to an aspect of an example embodiment of the disclosure, the determining the pruning number of each of the hidden layers, based on the relationship between the pruning number of the respective channels of each of the hidden layers and the corresponding pruning losses of each of the hidden layers, and the respective weight of each of the hidden layers, comprises: determining a relationship between the pruning number of the respective channels of each of the hidden layers and the corresponding weighted pruning loss of each of the hidden layers, based on the relationship between the pruning number of the respective channels of each of the hidden layers and the corresponding pruning loss of each of the hidden layers, and the weight of each of the hidden layers; and determining the pruning number of each hidden layer, based on the relationship between the pruning number of the respective channels of each of the hidden layers and the corresponding weighted pruning loss of each of the hidden layers.

According to an aspect of an example embodiment of the disclosure, the determining the relationship between the pruning number of the respective channels of each hidden layer and the corresponding pruning loss of each of the hidden layers, comprises: calculating, using an incremental manner or a decreasing manner, the pruning loss of each current candidate channel to be pruned respectively, wherein the incremental manner includes any current candidate channel to be pruned comprising a pruning number that includes the pruning numbers for each of the pruned channels determined by a previous channel pruning number and at least one unpruned channel, and the decreasing manner includes any current candidate channel to be pruned comprising a pruning number that corresponds to remaining pruned channels after removing at least one channel from pruned channels determined by the previous channel pruning number; and determining a current candidate channel to be pruned with a minimum pruning loss as the pruned channel corresponding to the current channel determined by the previous channel pruning number, to obtain the relationship between the current channel pruning number and the corresponding pruning loss of each of the hidden layers.

According to an aspect of an example embodiment of the disclosure, the compression parameter comprises a quantization rate, and the determining the compression parameter of the hidden layer in the machine learning model, comprises: determining a relationship between respective candidate quantization rates of each of the hidden layers in the machine learning model and corresponding quantization loss of each of the hidden layers; and determining a quantization rate of each of the hidden layers based on a relationship between the respective candidate quantization rates of each of the hidden layers and the corresponding quantization loss of each of the hidden layers.

According to an aspect of an example embodiment of the disclosure, the determining the relationship between respective candidate quantization rates of each of the hidden layers and the corresponding quantization loss of each of the hidden layers, comprises: determining the relationship between respective candidate quantization rates of each of the hidden layers and the corresponding quantization loss of each of the hidden layers, based on training data of a current hidden layer; and wherein the training data of the current hidden layer comprises a relationship between an output channel of the current hidden layer and each input channel of the current hidden layer.

According to an aspect of an example embodiment of the disclosure, the determining the quantization rate of each of the hidden layers based on the relationship between the respective candidate quantization rates of each of the hidden layer and the corresponding quantization loss of each of the hidden layers, comprises: determining the quantization rate of each of the hidden layers based on the relationship between the respective candidate quantization rates of each of the hidden layers and the corresponding quantization loss of each of the hidden layers, and the weight of each of the hidden layers.

According to an aspect of an example embodiment of the disclosure, wherein the determining the quantization rate of each of the hidden layers based on the relationship between the respective candidate quantization rates of each of the hidden layers and the corresponding quantization loss of each of the hidden layers, and the weight of each of the hidden layers, comprises: determining a relationship between the respective candidate quantization rates of each of the hidden layers and the corresponding weighted quantization loss, based on the relationship between the respective candidate quantization rates of each of the hidden layers and the corresponding quantization loss, and the weight of each of the hidden layers; and determining the quantization rate of each of the hidden layers, based on the relationship between the respective candidate quantization rates of each of the hidden layers and the corresponding weighted quantization loss of each of the hidden layers.

According to an aspect of an example embodiment of the disclosure, based on a current hidden layer corresponding one-to-one to a next hidden layer, the weight of the current hidden layer is the same as the weight of the next hidden layer; based on the current hidden layer corresponding to at least two next hidden layers by a multi-out structure, the weight of the current hidden layer is the sum of the weights of the at least two next hidden layers; and based on at least two current hidden layers corresponding to one next hidden layer by a multi-in structure, the weight of each current hidden layer is the weight of the next hidden layer allocated according to a channel proportion of each current hidden layer.

According to an aspect of an example embodiment of the disclosure, the determining the compression parameter of the hidden layer in the machine learning model, comprises: determining the compression parameter of the hidden layer, based on a loss relationship and an overall compression target parameter of the machine learning model; wherein, based on the compression parameter being a pruning number, the loss relationship comprises a relationship between the pruning number of the respective channels of each hidden layer in the hidden layer in the machine learning model and the corresponding weighted pruning loss of each of a plurality of hidden layers; based on the compression parameter being a quantization rate, the loss relationship comprises a relationship between respective candidate quantization rates of each of the hidden layers in the machine learning model and a corresponding weighted quantization loss of each of the hidden layers; and based on the compression parameter comprising a pruning number and a quantization rate, then the loss relationship comprises the relationship between the pruning number of respective channels of each of the hidden layers in the machine learning model and the corresponding weighted pruning loss, and the relationship between respective candidate quantization rates of each of the hidden layers in the machine learning model and the corresponding weighted quantization loss of each of the hidden layers.

According to an aspect of an example embodiment of the disclosure, the overall compression target parameter comprises at least one of an overall compression rate of the machine learning model or an overall loss of the machine learning model.

According to an aspect of an example embodiment of the disclosure, the determining the compression parameter of the hidden layer, based on the loss relationship and the overall compression target parameter of the machine learning model, comprises any one of the following: calculating a compression parameter of each of the hidden layers that minimizes an overall loss of the machine learning model based on the loss relationship and the overall compression rate of the machine learning model; and calculating a compression parameter of each of the hidden layers that maximizes the overall compression rate of the machine learning model based on the loss relationship and the overall loss of the machine learning model.

According to an aspect of an example embodiment of the disclosure, further comprising: selecting at least one of the following machine learning models as the machine learning model: a machine learning model before compression; a machine learning model obtained after compressing at least one hidden layer; a machine learning model after historical fine-tuning; and fine-tuning the compressed model based on the selected machine learning model to obtain an optimized model.

According to an aspect of an example embodiment of the disclosure, the fine-tuning the compressed model based on the selected machine learning model to obtain the optimized model, comprises: based on determining that the fine-tuned model does not satisfy a preset condition, repeatedly performing the operation of determining the compression parameter of the hidden layer in the machine learning model to be optimized, the operation of compressing the machine learning model to be optimized based on the compression parameter of the hidden layer, and the operation of fine-tuning the compressed model based on the learning model, until the fine-tuned model satisfies the preset condition, to obtain the optimized model.

According to an aspect of an example embodiment of the disclosure, after obtaining the optimized model, the method further comprises: splitting channels of at least one hidden layer of the optimized model into at least two groups of sub-channels respectively, and determining a network parameter of each group of the at least two groups of sub-channels, wherein each group of the at least two groups of sub-channels comprises corresponding input channels and output channels after grouping; and adding a combination layer to obtain a group compressed model, wherein the input of the combination layer is connected to the output channel of each group of the at least two sub-channels.

According to an aspect of an example embodiment of the disclosure which is outside the subject-matter of the claims, provided is an electronic device comprising: at least one processor; and a memory storing at least one instruction, wherein the at least one processor is configured to execute the at least one instruction, which causes the processor to: determine a pruning number for each of a plurality of channels included in a hidden layer of the machine learning model; determine a pruning loss of the hidden layer based on the determined pruning numbers of the hidden layer; determine a compression parameter of the hidden layer based on the pruning loss of the hidden layer of the machine learning model; and compress the machine learning model based on the determined compression parameter of the hidden layer, wherein the compression parameter is related to a pruning of the machine learning model.

In accordance with an aspect of the disclosure which is outside the subject-matter of the claims, provided is a method comprising:

determining a relationship between a pruning number of respective channels of each hidden layer and a corresponding pruning loss in a set hidden layer; determining the pruning number of each hidden layer according to the relationship between the pruning number of respective channels of each hidden layer and the corresponding pruning loss; and optimizing the machine learning model by pruning at least a portion of a layer of the machine learning model based on the determined pruning number of each hidden layer.

The pruning the at least the portion of the layer of the machine learning mode may include subtracting one output feature map of the hidden layer, which is a previous convolutional layer.

The method may further comprise deleting a corresponding part in a kernel matrix of a current layer and a subsequent layer.

## Advantageous Effects of Invention

According to embodiments of the disclosure, it is possible to reduce an amount of hard disk space and memory of the terminal device occupied by a neural network model, and improve operation speed of the neural network model on a device side.

## Brief Description of Drawings

The above and other aspects, features, and advantages of certain example embodiments of the disclosure will be more apparent from the following description taken in conjunction with the accompanying drawings, in which:

Fig. 1a is a flowchart of a method for updating a machine learning model according to an embodiment of the disclosure.
Fig. 1b is a flowchart of determining a compression parameter according to an embodiment of the disclosure.
Fig. 2a is a schematic diagram of a convolutional layer according to an embodiment of the disclosure.
Fig. 2b is a schematic diagram of an output feature map calculation process according to an embodiment of the disclosure.
Fig. 2c is a schematic diagram that the pruning influences the current layer and the subsequent layer according to an embodiment of the disclosure.
Fig. 2d is a schematic diagram of a data collection process according to an embodiment of the disclosure.
Fig. 3 is a schematic diagram of a conventional multi-branch structure in a neural network according to an embodiment of the disclosure.
Fig. 4 is a schematic diagram of a multi-branch compatible data allocation strategy according to an embodiment of the disclosure.
Fig. 5 is a relationship map between the pruning number and the pruning loss provided according to an embodiment of the disclosure.
Fig. 6 is a schematic diagram of weight allocation according to an embodiment of the disclosure.
Fig. 7 is a relationship map between the pruning number and the weighted pruning loss provided according to an embodiment of the disclosure.
Fig. 8 is a flowchart of automatically determining the pruning number provided according to an embodiment of the disclosure.
Fig. 9a is a flowchart of determining a compression parameter according to an embodiment of the disclosure.
Fig. 9b is a flowchart of automatically determining the pruning number and the quantization rate according to an embodiment of the present application.
Fig. 10 is a schematic flowchart diagram of a group compression method for a model according to an embodiment of the disclosure.

Fig. 11 is a schematic diagram of group pruning according to an embodiment of the disclosure.

Fig. 12 is a schematic diagram of group pruning process according to an embodiment of the disclosure.

Fig. 13a is a flowchart of splitting channels of each hidden layer according to an embodiment of the disclosure.

Fig. 13b is a schematic diagram of a group compression process according to an embodiment of the disclosure.

Fig. 14 is a relationship map between the pruning number and the weighted pruning loss associated with all input channels on a single output channel according to an embodiment of the disclosure.

Fig. 15 is a schematic diagram of an iterative group according to an embodiment of the disclosure.

Fig. 16 is an exemplary diagram of solving a grouping problem by graph theory modeling according to an embodiment of the disclosure.

Fig. 17 is a flowchart of a model compression method according to an embodiment of the disclosure.

Fig. 18 is an exemplary diagram of a scene text recognition application solution according to an embodiment of the disclosure.

Fig. 19 is an exemplary diagram of a human skeleton keypoints detection solution according to an embodiment of the disclosure.

Fig. 20 is a block diagram of an electronic device according to an embodiment of the disclosure.

Fig. 21 is a schematic structural diagram of a model optimization module according to an embodiment of the disclosure.

Fig. 22 is a schematic structural diagram of a group compression module for a model according to an embodiment of the disclosure.

## Mode for the Invention

Example embodiments of the present disclosure will be described in detail hereafter. The example embodiments have been illustrated in the drawings throughout which same or similar reference numerals refer to same or similar elements or elements having same or similar functions. The example embodiments described hereafter with reference to the drawings are illustrative, merely used for explaining the present disclosure and should not be regarded as any limitations thereto.

It should be understood by those skill in the art that singular forms "a", "an", "the", and "said" may be intended to include plural forms as well, unless otherwise stated. It should be further understood that terms "include/including" used in this specification specify the presence of the stated features, integers, steps, operations, elements and/or components, but not exclusive of the presence or addition of one or more other features, integers, steps, operations, elements, components, and/or combinations thereof. It should be understood that when a component is referred to as being "connected to" or "coupled to" another component, it may be directly connected or coupled to other elements or provided with intervening elements therebetween. In addition, "connected to" or "coupled to" as used herein may include wireless connection or coupling. As used herein, term "and/or" includes all or any of one or more associated listed items or combinations thereof.

In order to make the purpose, technical solution and advantage of the disclosure more clearly, the embodiments of the disclosure will be further described in detail below with reference to the accompanying drawings.

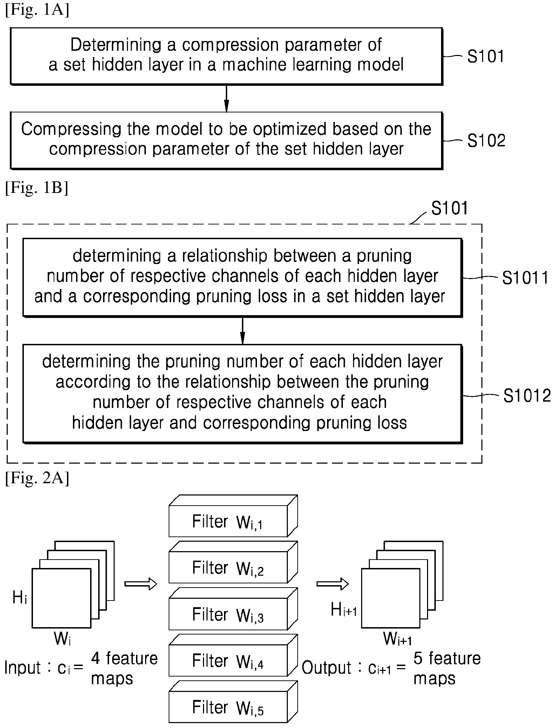

Fig. 1a is a flowchart of a method for updating a machine learning model according to an embodiment of the disclosure.

The embodiment of the disclosure provides a method for compressing a machine learning model, as shown in Fig. 1a. The method may be performed by an electronic device which processes an input value by using the electronic device. The electronic device may comprise various types of electronic devices, for example, a communication terminal, a laptop computer, a desktop personal computer (PC), a tablet PC, a wearable device, a home electronic appliance, or etc.

In Operation S101, the electronic device determines a compression parameter of a set hidden layer in the machine learning model to be optimized. According to an embodiment of the disclosure, the machine learning model is performed by an on device manner. The machine learning model by the on device manner may be embodied by resources of the electronic device, and may process an input of the machine learning model by using the resources of the electronic device. For example, nodes of the machine learning model may be embodied by a register or a storage of the electronic device (e.g., a memory), and parameter values of the machine learning model may be managed by the electronic device. The electronic device may process an input value by the machine learning model substantially without communication with an external device. Alternatively, the electronic device may mostly perform the operation of the machine learning model with only a minimal amount of communication with another device.

The machine learning model may correspond to an artificial intelligence model, and may be a model generated by machine learning based on training data. The model may be defined by nodes, branches between the nodes, at least one layer, functions of the at least one layer, and weight values of the branches. Computer program instructions and data sets for the model may be stored or recorded on the electronic device (e.g., in a memory of the electronic device), and the electronic device may perform the model by executing the computer program instructions based on the data sets.

The machine learning model may be embodied by various model structures. For example, the machine learning model may comprise a deep neural network structure, a convolution neural network, a recurrent neural network, or a combination thereof. According to the claimed invention, the machine learning model comprises a convolution neural network. Also, the machine learning model comprises a plurality of nodes, a plurality of layers, and a plurality of channels. The plurality of layers of the machine learning model comprises at least one hidden layer and may comprise an input layer and an output layer. The at least one hidden layer may process input values from the input layer by a non-linear function, and may output the processed input value to another hidden layer or the output layer.

The compression parameter of a set hidden layer may be a parameter for reducing a size of the set hidden layer. The electronic device may reduce the size of the hidden layer by various methods. For example, the electronic device may reduce the size of the hidden layer by pruning a part of branches in the set hidden layer, or grouping channels in the set hidden layer.

After determining the compression parameter of the set hidden layer, the electronic device compresses the model to be optimized based on the compression parameter of the set hidden layer, to obtain an optimized model in Operation S102. The electronic device may compress the model to optimize the model. The updating of the model may comprise compressing the model. The compressing of the model may comprise operations of updating the compression parameter of the set hidden layer or pruning branches of the model.

The technical solution provided by the embodiments of the disclosure, by compressing the model, may reduce the space and memory occupied by the model, reduce the calculation amount of the model, and achieve the purpose of simplifying the model, thereby improving operating speed of the model, which may be able to implement better deployment on the terminal device side.

The model optimization method proposed by the embodiment of the disclosure may be applied to neural network models with various structures, including but not limited to a deep learning model, a deep neural network model, a deep network model, a conventional three-layer neural network model, and the like.

In order to better interpret the working principle of model compression involved in one or more of the example embodiments of the disclosure, related structures in the neural network are introduced and explained herein: in a neural network, the influence on the size and operating speed of the model is concentrated in a network layer such as a convolutional layer or a fully connected layer. Therefore, if the number of parameters and/or the calculation amount of the network layer such as the convolutional layer and the fully connected layer in the model are reduced, the size of the model may be reduced accordingly, and the operation speed of the model may be improved, to achieve the purpose of simplifying the model. The model compression in the embodiment of the disclosure may process a network layer such as the convolutional layer and the fully connected layer in the model, and certainly, may also process other network layers. For convenience of description, in the embodiment of the disclosure, a network layer (for example, a convolutional layer) other than an input layer and an output layer in each network layer in the model to be optimized is referred to as a hidden layer.

In the embodiment of the disclosure, the adopted model compression technology includes pruning, quantization, and the like. That is, in Operation S101, the compression parameters of any hidden layer in the model to be optimized include pruning number, quantization rate, or a combination thereof.

The pruning technology may achieve the purpose of simplifying the model by discarding unimportant parameters in the neural network. For example, the pruning at the channel level may be adopted, which specifically refers to reducing the number of channels corresponding to the hidden layer when pruning a certain hidden layer. In a neural network, based on a certain channel of the hidden layer being removed, the corresponding parameters in subsequent layers associated with the channel may also be removed, thereby reducing the calculation amount and the required number of parameters. The pruning technology prunes a large model into a small model, and the final effect is often better than directly training the same small model. In other words, in the embodiment, a model that is small as a result of pruning may be more accurate than a small model that is directly trained to be a small model.

The quantization technology achieves the purpose of reducing the size of the model by representing parameters with fewer number of bits. Meanwhile, if using a hardware acceleration technology corresponding to the quantized data, the operating speed of the model may be improved.

In the embodiment of the disclosure, the model compression manner using the pruning technology is introduced, and the compression parameter is the pruning number in Operation S101.

Fig. 1b is a flowchart of determining a compression parameter according to an embodiment of the disclosure.

The inventors of the present application have found through research that in order to minimize the loss of accuracy in the process of compressing the model, during the pruning, a channel with lower "importance" may be selected for pruning. However, in practical applications, the high participation of human experts is usually required. For example, an experienced expert may determine a pruning rate of each layer (hidden layer) according to experience or experimental results. For example, for one hidden layer, the result of the pruning number being divided by the total number of channels may be the pruning rate of the layer. The experienced expert may observe the pruning rate of each layer, which may be proportional to the pruning number. However, the experienced expert approach will greatly reduce the flexibility of pruning, and will often take more time, but achieve lower efficiency. In addition, artificially setting the pruning rate may result in improperly setting the pruning rate. If the pruning rate is not set properly, it may cause a large loss in the model operation.

Regarding this, an aspect of the disclosure provides a possible implementation manner which performs a model compression method based on the pruning technology by using a fully automated process. Specifically, Operation S101 includes the following operations:

Operation S1011: determining a relationship between the pruning number of respective channels of each hidden layer and the corresponding pruning loss in the set hidden layer;

Operation S1012: determining the pruning number of each hidden layer according to the relationship between the pruning number of respective channels of each hidden layer and corresponding pruning loss.

In the embodiment of the disclosure, the set hidden layer is one or more hidden layers set in respective hidden layers. According to an embodiment of the disclosure, the set hidden layer may preset for which hidden layers are compressed, thereby selecting the above set hidden layer. For example, all of the convolutional layers and/or the fully connected layers in the model may be used as the above set hidden layer, or a part of convolutional layers or fully connected layers may be used as the above set hidden layer.

According to the embodiment of the disclosure, the set hidden layer may be selected according to the overall compression target of the model (which may be manually selected or automatically selected), for example, the set hidden layer may be selected to compress which hidden layers according to at least one of the overall compression rate of the model or the overall loss of the model. Based on the overall compression rate being equal to or greater than a threshold, more hidden layers may be selected to be compressed, or based on the overall compression rate being smaller than the threshold, fewer hidden layers may be selected to be compressed, for example, only one or more hidden layers with a large number of parameters and large calculation amount may be selected to be compressed. The model compression method proposed by the embodiment of the disclosure has a higher flexibility and is suitable for compression processing on various targets, since a set hidden layer may be flexibly selected to be compressed.

Each hidden layer of the model may include an input channel and an output channel. In the embodiment of the disclosure, pruning the model may refer to pruning the output channel of each layer of the model.

In practical applications, when pruning a layer of the model, if some output channels of the layer are pruned, the input channels of adjacent subsequent layers of this layer are correspondingly reduced, thereby influencing the calculation amount of adjacent subsequent layers.

Fig. 2a is a schematic diagram of a convolutional layer according to an embodiment of the disclosure.

As an example, taking an example that the hidden layer i is a convolutional layer, as shown in Fig. 2a, the left side is a group of input feature maps (total $c_i$= 4 feature maps), and the right side is a group of output feature maps ($c_{i+1}$= 5 feature maps). Assuming that the width and height of the input feature map are $W_i$ and $H_i$, respectively, and the width and height of the output feature map are $W_{i+1}$ and $H_{i+1}$, respectively. The convolutional layer may contain 5 filters, which are also known as convolution kernels, and each filter may correspond to an output feature map and may contain 4 kernels (representing a two-dimensional kernel, i.e., a two-dimensional part of the convolution kernel). The width and height of a kernel are usually referred to as kernel size ($k_{(i)w}Xk_{(i)h}$, for example 1X1, 3X3, 5X5, etc.). In the embodiment of the disclosure, a set of parameters of all filters of a layer is a 4-dimensional tensor, which is referred to as a kernel matrix (nuclear matrix).

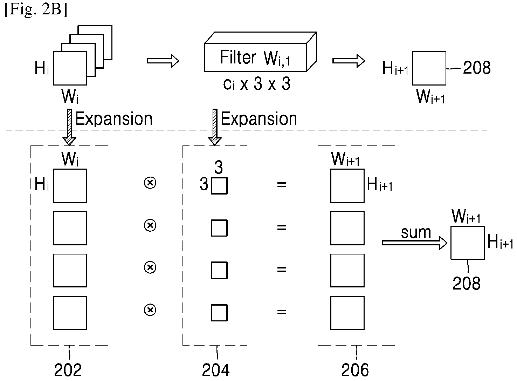

Fig. 2b is a schematic diagram of an output feature map calculation process according to an embodiment of the disclosure.

In the calculation process for the convolutional layer, as shown in Fig. 2b, each of 4 input feature maps ($W_iXH_i$) of $c_i$ 202 and one kernel (e.g., 3X3) in one filter 204 is performed with convolution respectively, to obtain 4 convolution result maps ($W_{i+1}XH_{i+1}$) 206. The 4 convolution result maps 206 are correspondingly summed, and the obtained result 208 is an output feature map ($W_{i+1}XH_{i+1}$, one of $c_{i+1}$ = 5 feature maps), and the process in Fig. 2b are repeatedly performed for ($i+1$) = 5 filters, all $c_{i+1}$ output feature maps 208 are obtained, and the calculation process of the convolutional layer is completed.

In the embodiment of the disclosure, the number of channels of the ith hidden layer (i.e., the hidden layer i) refers to the number $c_{i+1}$ of output channels of this hidden layer.

In the convolutional layer, a kernel ($k_{(i)w}Xk_{(i)h}$) may be convoluted with an input feature map for one time, and the required calculation amount is $k_{(i)w}Xk_{(i)h}XW_{i+1}XH_{i+1}$ (there are $W_{i+1}XH_{i+1}$ groups of pixels in each input feature map that need to be computed for $k_{(i)w}Xk_{(i)h}$ times), and the calculation amount may be but not limited to be represented by Multiply-Accumulate Operation (MAC). Then, an output feature map may need to perform convolution calculation for $c_i$ times, so the calculation amount thereof is $c_iXk_{(i)w}Xk_{(i)h}XW_{i+1}XH_{i+1}$. Then total required calculation amount of $c_{i+1}$ output feature maps may be $C_i=c_{i+1}Xc_iXk_{(i)w}Xk_{(i)h}XW_{i+1}XH_{i+1}$.

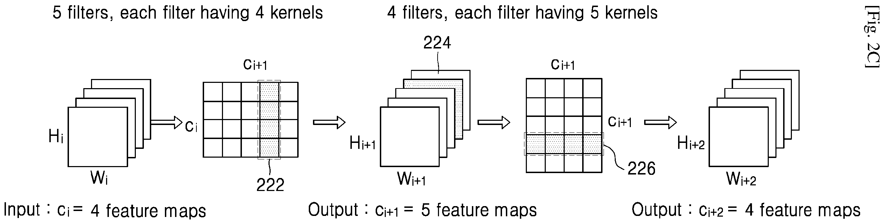

Fig. 2c is a schematic diagram that the pruning influences the current layer and the subsequent layer according to an embodiment of the disclosure.

When the output channel of the convolutional layer (that is, the number of output feature maps) is pruned, it not only influences the calculation amount of the current convolutional layer, but also influences the calculation amount of an adjacent subsequent convolutional layer. Specifically, referring to Fig. 2c, which shows the calculation process of the two convolutional layers before and after, each kernel matrix in Fig. 2c is represented by a two-dimensional matrix, and each element of the matrix is a k(i wXk(i)h kernel, that is, each column of elements represents a filter. The output feature map of the previous convolutional layer is the input feature map of the next convolutional layer. After subtracting one output feature map of the previous convolutional layer (assuming the dark fourth feature map 224 in Fig. 2c), the corresponding part in the kernel matrix of the current layer and a subsequent layer needs to be deleted: in the current layer, the fourth filter 222 (the dark fourth column matrix element in Fig. 2c) is deleted; in the subsequent layer, the fourth kernel 226 (the dark fourth row matrix element in Fig. 2c) of each filter is deleted.

Therefore, deleting the output channel of the current layer will influence the current layer and the subsequent layer, and accelerate the speed for the both layers. For example, if the number of output channels of each layer decreases to 50% of the previous number, then the calculation amount of almost all layers (except the first convolutional layer) will become 1/4 of the previous calculation amount:

$$\frac{c_{i+1}}{2} \times \frac{c_i}{2} \times k_w^{(i)} \times k_h^{(i)} \times W_{i+1} \times H_{i+1} = \frac{1}{4} C_i$$

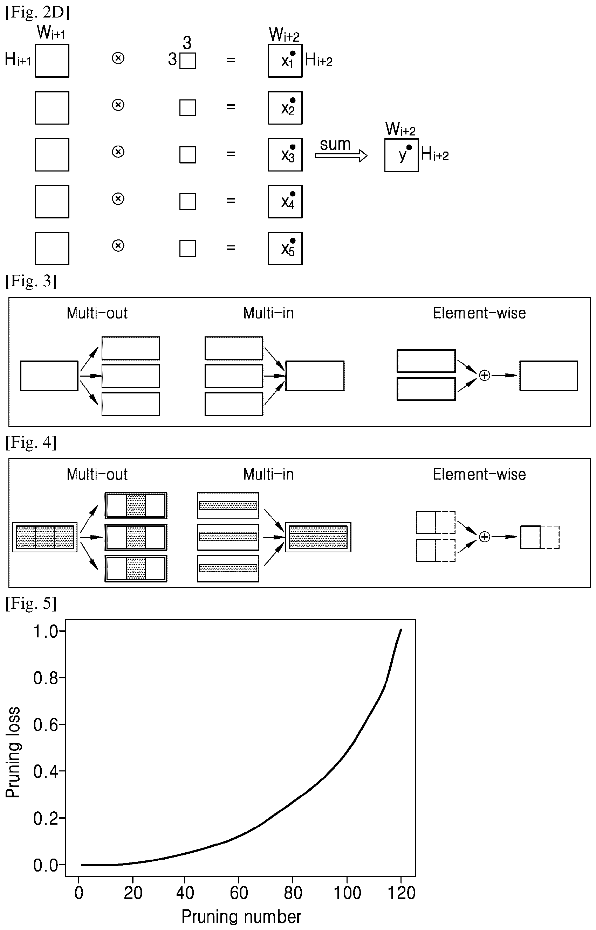

Fig. 2d is a schematic diagram of a data collection process according to an embodiment of the disclosure.

In the embodiment of the disclosure, the influence of the current layer pruning on the subsequent layers may be used to determine the importance of each output channel of the current layer.

Specifically, the relationship between the pruning number of respective channels and the corresponding pruning loss of the current hidden layer may be determined according to the training data of the next hidden layer. The training data may include the relationship between the output channel and each input channel.

This is because, in the calculation process of the training data of the next layer, a combination process of different input channels in the next layer will occur, which may indicate the importance of all input channels. In the calculation process of one output channel as shown in Fig. 2d (corresponding to the calculation process of one of the output channels of the next convolutional layer in Fig. 2c), the last operation is a summation operation. Meanwhile, different input channels are superimposed by summation to form one output channel. If one input channel has a small value, then the contribution thereof to the summation is small; conversely, if one input channel has a large value, it contributes a lot to the summation. From this, it is possible to compare the importance of different input channels. The input channel of the next layer corresponds to the output channel of the current layer, that is, the importance of the output channel of the current layer may be determined according to the training data in the subsequent layer. Then in order to obtain the training data of the next layer, it is necessary to perform sample collection in the calculation process for the feature map of the next layer (corresponding to the calculation process for a next convolutional layer in Fig. 2c).

Specifically, as shown in Fig. 2d, for the ith hidden layer, a point y on the output feature map of the (i+1)th hidden layer may be randomly selected, and the feature value of this point may be obtained by summing respective xk corresponding to the position of y in the result map after convoluting the previous ci+1 input channels (the input channels of the (i+1)th hidden layer, which also corresponds to the output channels of the ith hidden layer), that is,

$$y = \sum_{k=1}^{c_{i+1}} x_k$$

Wherein, xk represents the value of x corresponding to the kth channel, that is, the value of x corresponding to the position of y in the result map after convoluting the previous kth input channel, and at this time, $(x_1, x_2, ..., x_{c+1}, y)$ is a piece of training data indicating the relationship between the output channel and all input channels. If xk is larger, it indicates that the corresponding input channel contributes more to the output feature map, which means that the input channel is more important. After performing multiple samplings in this manner, the training data of the next layer may be obtained. The training data collected in the next layer is then allocated to the current layer to determine the importance of the output channel thereof, thereby pruning according to the importance.

Fig. 3 is a schematic diagram of a conventional multi-branch structure in a neural network according to an embodiment of the disclosure.

In the embodiment of the disclosure, for the data collection of each hidden layer of the model to be optimized, some training samples may be selected to input into the model to be optimized, and forward propagation is performed according to the above processes. During the forward propagation, a certain number of samples may be collected from the feature map of each layer until obtaining enough data for each layer to complete the data sampling process.

Considering that the network structure is constantly changing and developing nowadays, the network is more and more complex, and there are a large number of multi-branch networks. In order to improve the adaptability of various networks such as single-branch and multi-branch networks, the embodiments of the disclosure provide a possible implementation manner, which may accurately allocate training data to respective hidden layers of respective networks such as single-branch and multi-branch networks.

Firstly, respective branch structures are introduced: in early neural network models, for example, a VGG-16 network, each hidden layer has only one pre-order layer and one subsequent layer. The overall network structure is a "straight line" from beginning to end, and such network is referred to as a "single-branch network". Subsequently, a new structure was proposed. In a network similar to GoogLeNet, some layers have more than one pre-order layer, and some layers have more than one subsequent layer. Such network is referred to as a "multi-branch network".

Wherein, a conventional multi-branch structure includes the following three types, as shown in Fig. 3, for convenience of description, which are defined as follows: multi-out, multi-in, and element-wise. Specifically, if the output feature map of one layer is used as an input feature by more than one layer, the structure is referred to as Multi-out; if the input feature map of one layer is from an output feature map of more than one layer, the structure is referred to as a Multi-in structure; if in a network structure, the response values of the corresponding positions of the two groups of feature maps are summed to obtain a new group of feature maps, the respective number of channels of the two groups of input feature maps and the number of channels of the output feature maps are equal, the structure is referred to as Element-wise structure. The Element-wise structure is commonly found in a ResNet-like network structure in which the input feature map x becomes F(x) after passing through two convolutional layers, and then is performed the Element-wise sum operation with x from the shortcut to obtain F(x)+x and output to a subsequent layer.

Fig. 4 is a schematic diagram of a multi-branch compatible data allocation strategy according to an embodiment of the disclosure.

In the embodiment of the disclosure, the process of allocating training data may be different depending on whether the network has multiple branches. Specifically:

For a single-branch network, since the output channel of the previous layer is the input channel of the next layer, it is only necessary to allocate the training data collected by this layer to the corresponding previous layer.

For a multi-branch network, it is necessary to allocate the collected data needs to respective layers in a targeted manner, as shown in Fig. 4:

For the Multi-out structure, the pre-order layer has multiple training data since there are multiple subsequent layers. The training data collected from multiple subsequent layers may be combined as the training data of the pre-order layer. For example, if a layer has 3 subsequent layers and 10,000 pieces of training data are collected on each subsequent layer, then the data on these subsequent layers are combined, and the pre-order layer obtains 30,000 pieces of training data. For the Multi-out structure, each subsequent layer may separately reflect the weights of all channels of the pre-order layer. Therefore, it is not necessary to separately determine the training data of the pre-order layer for each training data, and only all the data of the subsequent layers are needed to be combined.

For the Multi-in structure, since there are multiple pre-order layers sharing the training data of a subsequent layer, the training data of the subsequent layers may be split according to sources of input channels, and the training data related to the input channels is respectively allocated to the corresponding pre-order layers as training data. For example, there are 4 pre-order layers (each layer has 64 output channels) that are aggregated into one subsequent layer (correspondingly, the layer has 256 input channels), and 10,000 pieces of training data are collected on subsequent layers, wherein in each piece of training data, y is obtained by adding 256 xk. Then, based on that the input channel splitting data is provided to the corresponding pre-order layer, each pre-order layer obtains 10,000 pieces of training data, wherein each training data y' is obtained by adding 64 xk.

For the Element-wise structure, since the channels of the previous and next layers correspond one-to-one and the pruning should be consistent, all layers in this structure may be regarded as an overall layer, and the obtained pruning results are equally applied to each layer. For training data, data collected on subsequent layers of all layers in this overall layer needs to be allocated to this overall layer. In other words, in the embodiment of the disclosure, any hidden layer may contain at least one Element-wise structure, and the same process may be performed according to a hidden layer that does not contain the Element-wise structure, which details will not be further described below.

In this manner, the corresponding training data may be obtained by each hidden layer of the model to be optimized, and the training data of the ith layer has the form (x(i)j,k, y(i)j), k=1, 2,..., ci+1, wherein ci+1 is the number of output channels of the ith layer. j = 1, 2, ..., Ni; Ni is the number of training samples in the ith layer. The data may be expressed as:

$$y_j^{(i)} = \sum_{k=1}^{c_{i+1}} x_{j,k}^{(i)}, \quad j=1,2,...,N_i$$

Fig. 5 is a relationship map between the pruning number and the pruning loss provided according to an embodiment of the disclosure.

Next, the training data may be used to calculate the importance of each channel in each hidden layer, thereby pruning based on the importance. Taking the current layer as an example, the embodiment of the disclosure provides a possible implementation manner to indicate the importance of each channel in the current layer. That is, in Operation S1011, the relationship between the pruning number (in piratical applications, the pruning number may also be replaced by a pruning rate, which the pruning number is used as an example to introduce herein, and the same part will not be described again) of respective channels of each hidden layer and the corresponding pruning loss may be determined.

Specifically, the relationship may be expressed in the form of a relationship map of the pruning number and the pruning loss. As shown in Fig. 5, in the embodiment of the disclosure, the relationship map of the pruning number and the pruning loss may be calculated by the following manner: calculating the pruning loss corresponding to each current candidate channel to be pruned, wherein any current candidate channel to be pruned includes a pruning number that includes the pruning numbers for each of the pruned channels determined by a previous channel pruning number and at least one unpruned channel (incremental manner hereafter), or any current candidate channel to be pruned includes a pruning number that corresponds to remaining pruned channels after removing at least one channel from the pruned channels determined by a previous channel pruning number (the decreasing manner hereinafter); determining a current candidate channel to be pruned with the minimum pruning loss as the pruning channel corresponding to the current channel pruning number, to obtain the relationship between the current channel pruning number and the corresponding pruning loss.

For example, the channel with the minimum influence on performance in all channels (for convenience of description, hereinafter referred to as the first channel) may be first determined, to calculate the pruning loss (i.e., the loss of the layer after pruning compared to before pruning) when the first channel (the pruning number is 1) is pruned. Then, on the basis of pruning the first channel, the influence on the performance of respectively pruning any one of the remaining channels may be calculated, and the pruning loss of the channel with the minimum influence on performance (i.e., the pruning number is 2, and the 2 pruned channel contains the first channel) may be determined, and analogously, the relationship map of the pruning number and the pruning loss as shown in Fig. 5 may be obtained.

The relationship map of the pruning number and the pruning loss is drawn in the incremental manner of the pruning number, and similarly, may be drawn in the decreasing manner of the pruning number, and may be a similar relationship map of the pruning number and the pruning loss as shown in Fig. 5, which principle may be referred to the incremental manner and will not be described herein.

From this relationship map, it may be seen the loss corresponding to respective pruning numbers in each layer, that is, the relationship map may reflect the relationship between the pruning number of respective channels and the corresponding pruning loss, that is, the importance of each channel. The calculating formula for the pruning loss is:

$$loss^{(i)}(p)=\frac{1}{N_i}\sum_{j=1}^{N_i}\left(\frac{y_j^{(i)}-\sum_{k\in s_p^{(i)}}x_{j,k}^{(i)}}{y_j^{(i)}}\right)^2$$

Wherein loss(i)(p) represents the information loss after pruning p channels in the ith layer, Ni is the number of collected samples corresponding to the current layer, p represents the pruning number, and S(i) represents a set of current remaining channels after pruning p channels in the ith layer, x(i)j,k represents the data related to the kth input channel in the jth sample data of the ith layer, and y(i)j is the sum of the data of the jth sample in the ith layer.

After obtaining the relationship between the pruning number of each hidden layer and the corresponding pruning loss, in Operation S1012, the pruning number of each hidden layer may be determined according to the relationship between the pruning number of respective channels of each hidden layer and the corresponding pruning loss.

The inventors of the disclosure have considered that for different hidden layers, the influence on the final result of the model output are different, and the determined relationship between the pruning number of respective channels and the corresponding pruning loss is respectively represented (the pruning loss is the loss of the current layer, rather than the influence on the entire network) in each hidden layer. If the pruning rate of each layer is respectively determined by the relationship between the pruning number of respective channels of each hidden layer and the corresponding pruning loss, the importance of the layer in the network may not be referenced, and the importance of different channels between different layers cannot be compared, and the respectively determined pruning rate of each layer may not be appropriate, thereby influencing the accuracy of the network.

Based on this, in order to enable the pruning losses between different layers to be compared with each other, in the embodiment of the disclosure, a weight is added to each layer to describe the importance of the layer, thereby obtaining a pruning solution with the minimum influence on the overall accuracy in all layers.

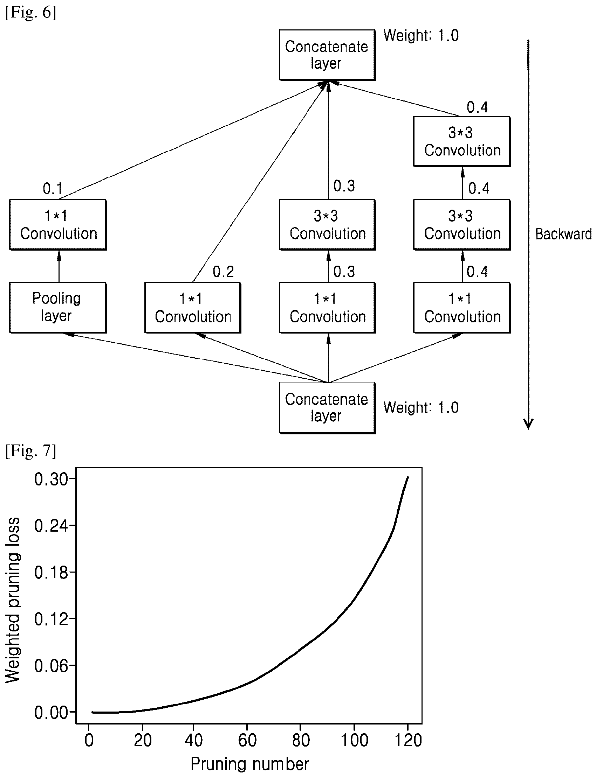

Fig. 6 is a schematic diagram of weight allocation according to an embodiment of the disclosure.

Similarly, in order to obtain the weight of each layer in the network, weights may be passed from back to the front in the network structure. As shown in Fig. 6, the weights are passed in the opposite direction of the neural network, all branches (4 branches in the figure) are allocated with the total weight, and finally the weights in the concatenate layer are aggregated. The last layer may be set to 1.0 (this value may be set in advance or set to other values). If there are multiple layers in the last layer, each layer may be set to 1, or the sum of the respective layers may be set to 1. In Fig. 6, taking that the weight of the last concatenate layer is set to 1.0 as an example, in the backward propagation, the four branches are allocated with the total weight of 1.0, and the specific allocation manner may include, but is not limited to, equalization, layer-size-based allocation, random allocation and the like, which may be set by those skilled in the art according to actual conditions. The 4 branches in Fig. 6 obtain the weights of 0.1, 0.2, 0.3, and 0.4, respectively, and their sum is still 1.0. The single-branch structure is maintained in each branch, so the allocated weight may be kept unchanged, and be directly passed forward, to obtain the weight of each layer between them. Finally, the weights of the respective branches are aggregated at the first concatenate layer, and the weight of the concatenate layer is 1.0.

In the embodiment of the disclosure, the allocation of weights may also be different depending on whether the network has multiple branches. Specifically:

For a single-branch structure, since the network will no longer be connected if any layer is removed, then each layer may be considered equally important, and the same weight should be allocated to each layer, and all weights may be passed forward (for example, 1.0), that is, if a current hidden layer corresponds to a next hidden layer, the weight of the current hidden layer is the same as the weight of the next hidden layer. Alternatively, a relatively complex processing manner may be adopted for a single-branch network, and the weight of each layer may be different. For example, the weight of each layer may be determined according to a task type, a task target, and an input content of the neural network. As an example, for some tasks, the network layer close to the output side has a greater influence on the output result, and the weight closer to the output end may be set larger; for some tasks, the network layer close to the input side has a greater influence on the output result, and the weight closer to the input side may be set larger. The weight of each layer may also be obtained from prior knowledge.

For the Multi-out structure, the weights of all subsequent layers are added to the pre-order layer, that is, if one current hidden layer corresponds to at least two next hidden layers, the weight of the current hidden layer is the sum of weights of at least two next hidden layers.

For the Multi-in structure, the weights are allocated to any pre-order layer according to the following ratio: allocating according to the ratio of the sum of the data after convolution through all channels of any pre-order layer to the sum of the data after convolution through all channels of the pre-order layer. For example, according to the ratio of the sum of the data of the channel corresponding to the pre-order layer to the sum of all the data in all training data collected by the subsequent layer, the weight of the subsequent layer is split and is allocated to the pre-order layer, that is, at least two current hidden layer corresponds to one next hidden layer, and the weight of each current hidden layer is the weight of the next hidden layer allocated according to a channel proportion of each current hidden layer.

For the Element-wise structure, as a whole, it shares one weight. However, since the Element-wise structure is a structure in which multiple branches are combined into a single-branch structure, the weights need to be forward allocated to the respective input branches during the forward propagation of the weight. This allocation manner may be implemented in multiple ways, such as artificially specified, or evenly distributed, or may be determined by sampling according to the sample data size ratio.

In this manner, the weight of each layer may be calculated simultaneously, and with these weights, comparisons may be made between channels of different hidden layers. In combination with the relationship between the pruning number of respective channels of each hidden layer and the corresponding pruning loss, in Operation S1012, the pruning numbers of each hidden layer are determined, according to the relationship between the pruning number of respective channels of each hidden layer in the set hidden layer and corresponding pruning loss, and the weight corresponding to each hidden layer in the set hidden layer.

Wherein, after obtaining the weights of respective layers of the model, the weights corresponding to each hidden layer in the set hidden layer may also be obtained.

Fig. 7 is a relationship map between the pruning number and the weighted pruning loss provided according to an embodiment of the disclosure.

Specifically, the relationship between the pruning number of respective channels of each hidden layer and the corresponding weighted pruning loss is determined, according to the relationship between the pruning number of respective channels of each hidden layer and the corresponding pruning loss, and a weight corresponding to each hidden layer; the pruning number of each hidden layer is determined, according to the relationship between the pruning number of respective channels of each hidden layer and the corresponding weighted pruning loss. That is, as shown in Fig. 7, on the relationship map of the pruning numbers and the pruning loss of each layer, the allocated weights of each layer are combined, and specifically, the weights of each layer are multiplied to the pruning loss corresponding to the same layer, thereby obtaining the relationship map of the pruning numbers and the weighted pruning loss (i.e., the above weighted pruning loss) of each layer. Meanwhile, the weighted pruning losses of the different layers may be compared to each other. Further, according to the importance of each layer and the importance of various channels, an optimal solution of the pruning numbers of each hidden layer may be determined in the global scope. In other words, the determination of the pruning number of each layer considers not only the pruning number but also the importance of each layer in the network, and the pruning number corresponding to each layer respectively is determined, and then pruning is performed according to the pruning number of each layer respectively, so that the pruning effect of each layer is better, and the accuracy of the compressed model is improved.

In practical applications, the model may be pruned by combining the weights of each layer with the importance of other defined channels. For example, the norm of the relevant parameters of different channels is used as the basis for importance, or a regularization term may be added; those skilled in the art may make appropriately changes on the above examples, which should also belong to the scope of the disclosure.

In the embodiment of the disclosure, a possible implementation manner is provided for how to provide a pruning strategy for each layer in a global scope: in Operation S1012, the compression parameter of the set hidden layer is determined according to the loss relationship and the overall compression target parameter of the model, wherein the overall compression target parameter includes an overall compression rate of the model and/or an overall loss of the model; in other words, the compression parameter of the set hidden layer is determined according to the loss relationship and at least one of the following: the overall compression rate of the model and the overall loss of the model; that is, when the compression parameter is the pruning number, the pruning number of each hidden layer is determined, by a combination optimization algorithm, according to the relationship between the pruning number of respective channels of each hidden layer and the corresponding weighted pruning loss, as well as the overall compression target parameter (at least one of the following: the overall compression rate of the model and/or the overall loss of the model). Wherein, the loss relationship may also be the relationship between the pruning number of respective channels of each hidden layer and the corresponding pruning loss. Specifically, the overall pruning rate may be controlled, and the overall loss may also be controlled, and the task may be approximated into a group knapsack problem, which may be solved by dynamic programming.

If the overall pruning rate is controlled (equivalent to controlling the overall calculation amount or the size occupied by the overall parameter), that is, according to the loss relationship and the overall compression rate of the model (i.e., the overall pruning rate), the compression parameter (i.e., the pruning number) of each set hidden layer that minimizes the overall loss of the model is calculated, which the solution process is as follows:

$$\min_{x} \sum_{i} lossw^{(i)}(c_{i+1} - x_i)$$

$$s.\,t. \sum_{i1} \sum_{i2} q_{i1,i2} x_{i1} x_{i2} \leq f_0$$

$$x_i \in \{1, ..., c_{i+1}\}$$

Wherein $x_i$ is the number of channels retained after pruning in the ith layer, $c_{i+1}$ is the total number of channels in the ith layer, and $lossw^{(i)}(p)$ represents the weighted pruning loss after pruning p channels in the ith layer, which is obtained by $loss^{(i)}(p)$ multiplied by the weight of the ith layer (it should be noted that $c_{i+1} - x$ is the pruning number of ith layer, and may also be represented by p and may be used as the independent variable of $lossw^{(i)}$), $f_0$ is the calculation amount calculated according to the given overall pruning rate, $q_{i1,i2}$ is the calculation amount of performing a convolution operation on one input feature map of the layer, and $q_{i1,i2} x_{i1} x_{i2}$ is the calculation amount of this layer calculated based on the number of channels $x_{i1}$ and $x_{i2}$ retained in the previous and next layers.

If the overall loss is controlled (equivalent to controlling the accuracy of the model), that is, according to the loss relationship and the overall loss of the model, the compression parameter (i.e., the pruning number) of each set hidden layer that maximizes the overall compression rate (i.e., the overall pruning rate) of the model (correspondingly, the calculation amount of the compressed model is the smallest) is calculated, which the solution process is as follows:

$$\min_{x} \sum_{i1} \sum_{i2} q_{i1,i2} x_{i1} x_{i2}$$

$$s.\ t.\ \sum_i lossw^{(i)}(c_{i+1}-x_i) \le l_0$$

$$x_i \in \{1,...,c_{i+1}\}$$

Where l0 is the given overall loss, and the definitions of other variables are consistent with the previous solution.

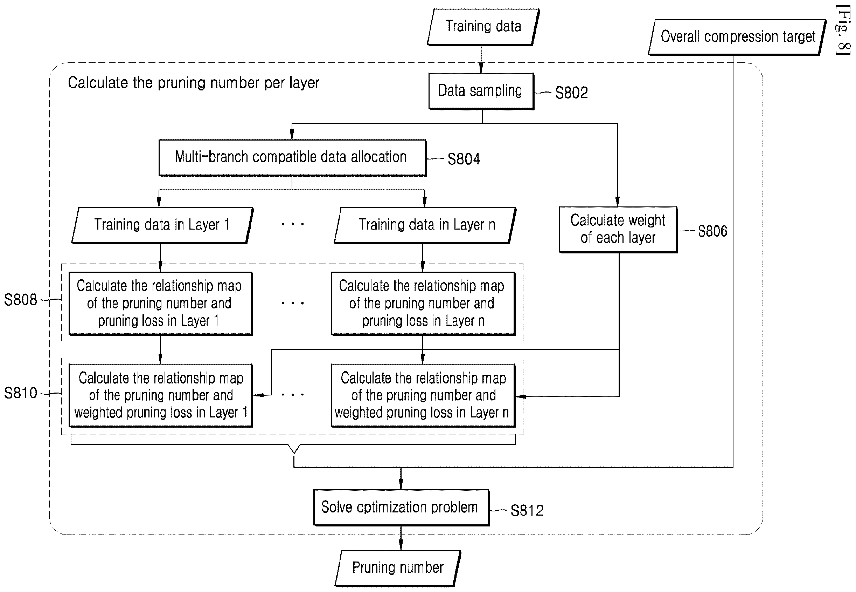

Fig. 8 is a flowchart of automatically determining the pruning number provided according to an embodiment of the disclosure.

In summary, the overall flow of the above technical solution for automatically determining the compression parameter (the pruning number or the pruning rate) of each layer is as shown in Fig. 8. First, samples are collected in the forward conduction process of the model (corresponding to the data sampling in Fig. 8, S802), and the corresponding training data and the weight of each layer (which may reflect the importance of each layer in the network) are distributed to each layer (S804, S806). For a multi-branch network, multi-branch compatible allocation technology (i.e., the above methods for allocating data and weights of the multi-branch network) may be utilized to allocate training data and weights for each layer to obtain the training data from layer 1 to layer n and the weights of each layer as shown in Fig.8; the relationship map of the pruning number of each layer and the pruning loss is calculated according to the training data of each layer to obtain the relationship map of the pruning number and the pruning loss from layer 1 to layer n as shown in Fig. 8 S808; the pruning loss in the relationship map of the pruning number and the pruning loss is weighted according to the weight of each layer, to calculate the relationship map of the pruning number of each layer and the weighted pruning loss S810; then, the optimization problem is solved (i.e., solved by the combinatorial optimization algorithm) according to the relationship map of the pruning number of each layer and the weighted pruning loss as well as the given overall compression target (overall compression rate or overall loss), to obtain the pruning number of each layer S812. Wherein, the pruning rate of each layer may also be calculated in the above manner, that is, the pruning number of each layer in Fig. 8 may also be the pruning rate of each layer.

Further, in Operation S102, the model to be optimized is compressed according to the pruning number of the set hidden layer, to obtain an optimized model.

The foregoing technical solution provided by the embodiment of the disclosure may automatically determine the optimal pruning number or pruning rate of each layer in a global scope with a given overall compression target, and may simultaneously determine the pruning number or pruning rate of each layer, which does not require artificially setting the compression rate of each layer, thereby greatly improving the flexibility of compression, saving the time cost of model compression, and improving the compression efficiency. In addition, the automatically determined compression rate is more accurate, thereby avoiding the large loss caused by compression.

Moreover, the technical solution may be applied to a commonly used multi-branch network structure with good adaptability, and can accurately determine the importance of each layer in the multi-branch network, and further automatically determine optimal pruning rate for each layer in the multi-branch network according to the importance of each layer, and in addition, it may accurately allocate the training data to the respective layers in the multi-branch network.

In addition, different from the method for calculating the pruning number or pruning rate layer by layer, in the above technical solution according to the embodiment of the disclosure, each pruning refers to calculating the optimal pruning number and the pruning rate of each layer in the global scope. In other words, it is determined that the determination of the pruning number or the pruning rate of each layer considers not only the current layer but also the importance of each layer in the network. Therefore, the pruning number or the pruning rate corresponding to each layer respectively is determined comprehensively, and then the pruning is performing on each layer according to the pruning number or the pruning rate of each layer respectively, such that the accuracy of compression rate of each layer is higher, and the accuracy of the compressed model is improved.

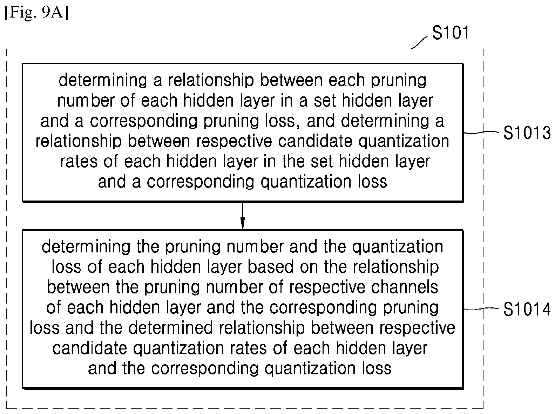

Fig. 9a is a flowchart of determining a compression parameter according to an embodiment of the disclosure.

In the embodiment of the disclosure, a model compression method that uses both a pruning technology and a quantization technology is introduced, that is, a model compression manner in which the compression parameter includes a pruning number and a quantization rate in Operation S101.

The inventors of the disclosure have found that the quantization method and the pruning method are complementary. If using a common compression method that first performs pruning and then performs quantization, even if the quantification is similar to the pruning, fine-tuning (when further training on the data set, often set the learning rate and other parameters to a lower value, and only a small adjustment is processed compared with the previous training) is required to be repeated, which makes more operations in the overall compression process for the model and cost more time.

In fact, the quantization and the pruning are compressions on the model at different levels, which the pruning is to reduce the number of network parameters, and the quantization is to reduce the number of bits required to represent a single parameter. It is observed that there is a similarity between the quantization process and the pruning process: both have compression rates (the compression rate here may correspond to the compression rate of the model calculation amount, and may also correspond to the compression rate of the storage space required by the model), and meanwhile, both of the above compression processes will cause loss. Therefore, the two have certain complementarity, and the quantization process and the pruning process may be combined, and it may achieve better compression effect while using the both.

Therefore, the embodiment of the disclosure proposes to combine the quantization and pruning processes, and determines the pruning number and the quantization rate of each layer simultaneously, and performs a corresponding process according to the pruning number and the quantization rate of each layer to improve the overall optimization speed. Specifically, Operation S101 may include the operations of:

Step S1013: determining the relationship between each pruning number of each hidden layer in the set hidden layer and the corresponding pruning loss, and determining a relationship between respective candidate quantization rates of each hidden layer in the set hidden layer and the corresponding quantization loss;

Step S1014: determining the pruning number and the quantization loss of each hidden layer according to the relationship between the pruning number of respective channels of each hidden layer and the corresponding pruning loss and the determined relationship between respective candidate quantization rates of each hidden layer and the corresponding quantization loss.

Wherein, for the manner of determining the relationship between pruning number of respective channels of each hidden layer in the set hidden layer and the corresponding pruning loss in Step S1013, it may be referred to the description of Step S1011 in the above, and details are not described herein.

In the embodiment of the disclosure, the quantization rate of each layer may refer to the quantization rate corresponding to the convolution kernel at each convolution operation in the layer.

Specifically, consistent with the pruning process, the quantization process also needs to first collect relevant training data, which is not limited to a specific collecting manner in the disclosure. Different from the pruning process, the collection of the quantized data may be completed in a single layer, that is, for each layer, according to the training data of the current hidden layer, the relationship between the respective candidate quantization rates and the corresponding quantization loss of the current hidden layer is determined; wherein, the training data includes the relationship between the output channel and each input channel. This is because the change of quantization for a single layer does not influence the structure of the previous and next layers. Then, according to the collected data, the relationship between the respective candidate quantization rates of each hidden layer and the corresponding quantization loss may be calculated.

Similarly, the relationship may be represented in the form of a relationship map of a candidate quantization rate and a quantization loss, which is similar to the process shown in Fig. 5 and will not be further described herein.

Moreover, in order to enable the quantization losses between different layers to be compared with each other, it is also possible to add a weight to each layer to describe the importance of the layer, thereby obtaining a quantization solution having the minimum influence on the overall accuracy in all layers. That is, in Step S1014, the quantization rate of each hidden layer is determined according to the relationship between the respective candidate quantization rates of each hidden layer in the set hidden layer and the corresponding quantization loss, as well as the weight corresponding to each hidden layer.

In the embodiment of the disclosure, the weight of each layer obtained by the pruning process may be directly reused, thereby reducing steps of calculating the weight.

After that, the relationship map of the candidate quantization rate and the weighted quantization loss may be obtained, which is similar to the process shown in Fig. 7 and will not be described herein.

Then, the pruning strategy and the quantization strategy of each layer are also given from the global scope, that is, in Step S1014, the compression parameter of the set hidden layer is determined according to the loss relationship and the overall compression target parameter of the model, wherein the overall compression target parameter includes an overall compression rate of the model and/or an overall loss of the model; that is, the compression parameter of the set hidden layer is determined according to the loss relationship and at least one of the following: the overall compression rate of the model and the overall loss of the model; that is, when the compression parameter includes the pruning number and the quantization rate, the pruning number of each hidden layer is determined, by a combination optimization algorithm, according to the relationship between the pruning number of respective channels of each hidden layer and the corresponding weighted pruning loss, the relationship between respective candidate quantization rate of each hidden layer and the corresponding weighted pruning loss as well as the overall compression target parameter (at least one of the following: the overall compression rate of the model and/or the overall loss of the model). Wherein, the loss relationship may also be the relationship between the pruning number of respective channels of each hidden layer and the corresponding pruning loss, as well as the relationship between the respective candidate quantization rates of each hidden layer and the corresponding quantization loss. Specifically, the overall pruning rate may be controlled, and the overall loss may also be controlled, and the task may be approximated into a group knapsack problem, which may be solved by dynamic programming.

If the overall compression rate is controlled (equivalent to controlling the overall calculation amount or the size occupied by the overall parameter), that is, according to the loss relationship and the overall compression rate of the model, the compression parameter (i.e., the pruning number and the quantization rate) of each set hidden layer that minimizes the overall loss of the model is calculated, which the solution process is as follows:

$$\min_{x} \sum_{i} lossw^{(i)}(c_{i+1} - x_i) + \sum_{i} lossqw^{(i)}(z_i)$$

$$s.\ t.\ \sum_{i1} \sum_{i2} q_{i1,i2} x_{i1} x_{i2} + \sum_{i3} p(i, z_{i3}) \leq f_0$$

$$x_i \in \{1, ..., c_{i+1}\}$$

$$z_i \in Z_i$$

Wherein, $z_i$ is the quantization rate of the ith layer, $Z_i$ is the set of all possible quantization rates of the ith layer, and $lossqw(i)(z_i)$ is the quantization loss corresponding to the quantization rate z adopted by the ith layer, $p(i, z_{i3})$ represents the total calculation amount (or the space occupied by the layer parameter) of the ith layer after using the quantization rate $z_i$, and $f_0$ is the calculation amount (or the model size, which needs to correspond to the meaning represented by p, that is, when p represents the calculation amount, $f_0$ also represents the calculation amount or the computation amount, p represents the size of the space occupied by the parameter, and $f_0$ represents the model size) calculated according to the given pruning rate and the quantization rate, which other variables may be referred to the calculation method for determining the pruning number and are not described here.

If the overall loss is controlled (equivalent to controlling the accuracy of the model), that is, according to the loss relationship and the overall loss of the model, the compression parameter (i.e., the pruning number and the quantization rate) of each hidden layer that maximizes the overall compression rate of the model (correspondingly, the calculated amount of the model is the smallest) is calculated, which the solution process is as follows:

$$\min_{x} \sum_{i1} \sum_{i2} q_{i1,i2} x_{i1} x_{i2} + \sum_{i3} p(i, z_{i3})$$

$$s.t. \sum_{i} lossw^{(i)}(c_{i+1} - x_i) + \sum_{i} lossqw^{(i)}(z_i) \leq l_0$$

$$x_i \in \{1, ..., c_{i+1}\}$$

$$z_i \in Z_i$$

The definition of respective variables, may refer to the various solutions in the above, and further details are not provided here.

In the embodiment of the disclosure, when performing model compression, if the quantization methods are different, the process of determining the quantization rate may be different. The following specifically gives two existing quantization methods to determine the quantization rate, including how to collect data, how to determine the loss relationship, etc.

Selecting Incremental Network Quantization (INQ, which converts the parameter to 2 order power, and the last number of bits may be set) as a quantization method. When sampling the data, training data $y(i)j,k$, ($t = 1, 2, ..., T$; $j = 1, 2, ..., Mi$) at different quantization rates t may be collected; wherein T is the total level of quantization, and Mi is the number of overall samples in the ith layer. $y(i)j$ represents the data collected at the jth unquantified. Then the corresponding loss $lossq(i)(t)$ of the ith layer at the given quantization rate t may be calculated as follows:

$$lossq^{(i)}(t)=\frac{1}{M_i}\sum_{j=1}^{M_i}\left|1-\frac{y_{j,t}^{(i)}}{y_j^{(i)}}\right|$$

Meanwhile, the influence on the calculation amount (or model size) at different quantization rates may be directly calculated according to the quantization rate.

(2) Selecting Integer-Arithmetic-Only-Inference (IAOI, which requires only 8-bit integer arithmetic after quantization) as the quantization method. For each layer, there may be two choices: quantization or non-quantization. Therefore, when collecting the data, two forward conductions may be performed for each layer, in which one is quantized, and the other is not quantized; for the quantization rate: the quantization rate is 0% when not quantized, and 100% when quantized, and meanwhile the loss may also be calculated by the change of the feature maps before and after quantization. Therefore, the obtained relationship map of the quantization rate and loss has values only in two positions: 0% (not quantized) and 100% (quantized).

Furthermore, in addition to the manners proposed in the foregoing embodiment of the disclosure to determine the pruning number and the quantization rate, the pruning rate and the quantization rate may also be determined according to other methods, which are not specifically limited herein. As long as the quantization process and the pruning process are combined, the process will result in better compression effect.

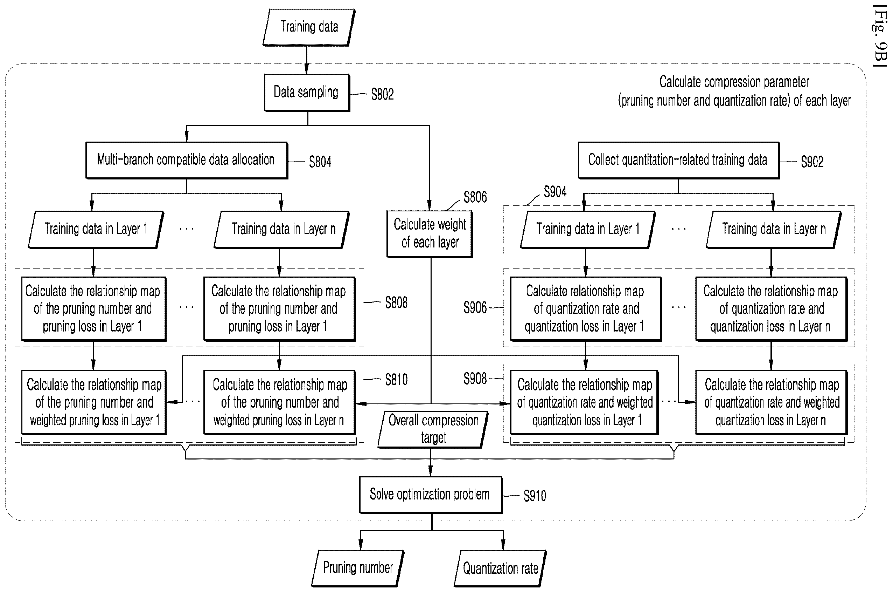

Fig. 9b is a flowchart of automatically determining the pruning number and the quantization rate according to an embodiment of the present application.

In summary, the overall process of the above technical solution for automatically determining the pruning number and the quantification rate of each layer is shown in Fig. 9b, and may also be considered as a process of combining the quantification process into the process of automatically determining the pruning rate as shown in Fig. 8. The same parts in Fig. 9b as those in Fig. 8 are not described again, and the different part is that the quantization part needs to collect the quantization-related training data S902 as shown in Fig. 9b, obtain the training data from layer 1 to layer n S904, calculate the relationship map of the quantization rate and the quantization loss of each layer according to training data of each layer S906 as shown in Fig. 9, and obtain the relationship maps of the quantization rate and the quantization loss from layer 1 to layer n, and weight the quantization loss in the relationship map of the quantization rate and the quantization loss through the weight of each layer obtained by the pruning process, and calculate the relationship map of the candidate quantization rate and the weighted quantization loss of each layer S908, and then solve the optimization problem (i.e., solved by the combination optimization algorithm), according to the relationship map of the pruning number and the weighted pruning loss and the relationship map of the quantization rate and the weighted quantization loss as well as the given overall compression target (overall compression rate or overall loss) to obtain the pruning number and the quantization rate of each layer S910.

Further, in Step S102, according to the pruning number and the quantization rate of the set hidden layer, the model to be optimized is compressed to obtain an optimized model.

In the embodiment of the disclosure, a model compression manner using the quantization technology is introduced, that is, a model compression manner in which the compression parameter includes a quantization rate in Step S101.

Similarly, in order to solve that the artificially setting a quantization rate will reduce the flexibility of the model compression and the loss from improper setting the quantization rate, the embodiment of the disclosure adopts a fully automated process to execute a model compression method based on the quantization technology, and specifically Step S101 may include the steps of:

Step S1015: determining a relationship between respective candidate quantization rates of each hidden layer in the set hidden layer and corresponding quantization loss;

Step S1016: determining a quantization rate of each hidden layer according to a relationship between respective candidate quantization rates of each hidden layer and corresponding quantization loss.

Wherein, in Step S1015, it is necessary to determine the relationship between respective candidate quantization rates and corresponding quantization loss of the current hidden layer according to the training data of the current hidden layer, which the specific executing process may refer to the description of Step S1013 and will not be repeated herein.

Similarly, in order to enable the pruning losses between different layers to be compared with each other, a weight is added to each layer to describe the importance of the layer, thereby obtaining a pruning solution with the minimum influence on the overall accuracy in all layers. That is, in Step S1016, the quantization rate of each hidden layer is determined according to a relationship between respective candidate quantization rates of each hidden layer and corresponding quantization loss, and a weight corresponding to each hidden layer. Specifically, the relationship between respective candidate quantization rates of each hidden layer and corresponding weighted quantization loss is determined according to the relationship between respective candidate quantization rates of each hidden layer and corresponding quantization loss, and a weight corresponding to each hidden layer; the quantization rate of each hidden layer is determined according to the relationship between respective candidate quantization rates of each hidden layer and corresponding weighted quantization loss. The manner of determining the weight may refer to the manner of determining the weight of each layer in the pruning process, and details will not be described herein.

Further, the quantization strategy of each layer are also given from the global scope, that is, in Step S1016, the compression parameter of the set hidden layer is determined according to the loss relationship and the overall compression target parameter; that is, the compression parameter of the set hidden layer is determined according to the loss relationship and at least one of the following: the overall compression rate of the model and the overall loss of the model; that is, when the compression parameter includes the quantization rate, the quantization rate of each hidden layer is determined, by a combination optimization algorithm, according to the relationship between respective candidate quantization rates of each hidden layer and the corresponding weighted quantization loss. Wherein, the loss relationship may also be the relationship between the pruning number of respective channels of each hidden layer and the corresponding pruning loss. Specifically, the overall pruning rate may be controlled, and the overall loss may also be controlled, and the task may be approximated into a group knapsack problem, which may be solved by dynamic programming.

If the overall compression rate is controlled (equivalent to controlling the overall calculation amount or the size occupied by the overall parameter), that is, according to the loss relationship and the overall compression rate of the model, the quantization rate of each set hidden layer that minimizes the overall loss of the model is calculated, which the specific solution process may be referred to above and will not be described herein.

If the overall loss is controlled (equivalent to controlling the accuracy of the model), that is, according to the loss relationship and the overall loss of the model, the quantization rate of each set hidden layer that maximizes the overall compression rate of the model is calculated, which the specific solution process may be referred to above and will not be described herein.

In this manner, the quantization rate of each set hidden layer may be obtained. Further, in Step S102, according to the quantization rate of the set hidden layer, the model to be optimized is compressed to obtain an optimized model.

The foregoing technical solution provided by the embodiment of the disclosure may automatically determine the optimal quantization rate of each layer in a global scope with a given overall compression target, which does not require artificially setting the compression rate of each layer, thereby greatly improving the flexibility of the compression, saving the time cost of model compression, and improving the compression efficiency. In addition, the automatically determined compression rate is more accurate, thereby avoiding the large loss caused by compression.

In addition, different from the method for calculating the quantization rate layer by layer, in the above technical solution provided by the embodiment of the disclosure, each quantization refers to calculating the optimal quantization rate of each layer in the global scope. In other words, the determination of the quantization rate of each layer considers not only the current layer but also the importance of each layer in the network. Therefore, the quantization rate corresponding to each layer is determined respectively, and then the quantization is performed on the each layer according to the quantization rate of each layer respectively, such that the accuracy of quantization rate of each layer is higher, and the accuracy of the compressed model is improved.

The inventors of the disclosure also believe that in the model compression process, whether it is the pruning and/or quantization, the information that is pruned or quantized is relatively unimportant, but also includes certain information that may influence the expression capability of the parameters and the accuracy of the model, so the effect of the model will decrease after compression.

Conventionally, it is expected that the lost information will be adjusted back through the fine-tuning process. But the "fine-tuning" network only trains the network on a small data set, and sets the learning rate to a lower value. Since the previous information is discarded and it is more difficult to learn back, the influence of the training process on the network is smaller than that of the larger learning rate.

In the embodiment of the disclosure, fine-tuning is performed by means of knowledge distillation technology, and the knowledge of the larger model is used to guide the training of the small model, thereby improving the performance of the small model. In general, a large model is easier to obtain a good training effect, while a small model is limited to model capacity and is often not easy to be trained. By the small model "learning" and "simulating" the performance of the large model, the effect of the small model will be improved.

The embodiment of the disclosure proposes that after the model is subjected to a compression process (such as pruning and/or quantization), the compressed model may be fine-tuned by a knowledge distillation method. Specifically, at least one of the following models is selected as a learning model: a model before compression, a model after compressing at least one hidden layer, and a model after historical fine-tuning; the compressed model is fine-tuned according to the learning model to obtain an optimized model.

Since the model before compression is larger than the compressed model and has more information in the process of compressing a model, the model before compression may be selected as the learning model (also referred to as a teacher model). It is also possible to select a model at any stage of this compression process as a teacher model, such as a model in which some hidden layers is compressed by pruning processing and/or quantization processing, and the model at this time is larger than later compressed model and has more information. In addition, since the model obtained after the fine-tuning process (that is, the model after the historical fine-tuning processing) also has relatively more information, which may also be used as a learning model. The compressed model is used as a student model and is fine-tuned by means of knowledge distillation to improve the performance of the student model.

A fully connected layer may be added to the same key positions of the teacher model and the student model (for example, at the intersection of important modules, etc., which may be artificially set), to aggregate them into a loss layer. The student model is trained by the distribution difference between the student model and the teacher model as the target. When the difference between the two models is less than a certain degree, the fine-tuning process may be terminated early. Due to the guidance from the teacher model, the entire fine-tuning process will be more efficient and faster.

In the embodiment of the disclosure, if the model after the fine-tuning does not satisfy a preset condition, the step of determining the compression parameter of the set hidden layer in the model to be optimized and compressing the model to be optimized (i.e., pruning and/or quantization process) according to the compression parameter of the set hidden layer, and the step of fine-tuning the compressed model according to the learning model (i.e., the step of fine-tuning the compressed model according to the learning model) are repeatedly performed, until the fine-tuned model satisfies the preset condition, to obtain the optimized model.

Wherein, the preset condition may be determined according to a given compression target, which may specifically refer to the overall compression rate and/or the preset condition related to the overall compression rate and the loss, for example, whether the overall compression rate is reduced to 50% of the original target, or whether the overall loss reaches 50% of the original target, etc. The preset threshold may be set by those skilled in the art according to the actual situation, which is not limited herein.

It may be understood that the model to be optimized in Step S101 may be an original model to be optimized, and for the case where the fine-tuned model does not satisfy the preset condition, the model to be optimized may also be a fine-tuned model, and the execution processes are consistent with each of the above embodiments and will not be described again here.

It should be noted that the teacher model selected in the fine-tuning process may be the original model to be optimized, which has the most information, or a model with key steps in previous compression processes, for example, a model with the previous compression step, and the number of teacher models may be one or more, which is not limited herein.

This application uses knowledge distillation technology to fine-tune the pruned and/or quantized model, makes full use of the information lost during the model compression process, and makes full use of the previously learned results, so that the fine-tuning process may be more targeted and the accuracy of the compressed model is improved, thereby accelerating the fine-tuning process and making the fine-tuning process faster and more efficient.

The inventors of the disclosure have also considered that different compression methods or overall compression levels may be suitable for different models. This process, if given by human experts based on experience, also influences the flexibility of model compression. Based on this, the embodiment of the disclosure proposes that the overall compression target is controlled by reinforcement learning to achieve the full automation. In other words, the overall compression target parameter of the model is determined by the reinforcement learning algorithm.

In combination with the above, as long as the overall compression target is given, it is possible to automatically solve the optimal compression parameters of respective layers. In other words, a fully automated process may be achieved as long as the overall compression target is automatically determined.

Specifically, the overall compression rate of the model and the overall loss of the model are determined by a reinforcement learning algorithm (for example, A3C or the like). The Action Space is given by discrete compression parameters, such as 10%, 20%, and the like. In addition to the basic state of the network, the state space includes the model size, the current pruning process, etc., and also includes the relevant statistics of the previously calculated relationship map of compression parameters (e.g., the pruning number) and the loss (e.g., average loss, loss variance, etc.). The reward function not only considers the compression rate and compression loss, but also the speed of compression. If the total compression rate is less than a given value within a certain steps, the reward function returns a negative value.

In the embodiment of the disclosure, in the model compression stage, the model to be optimized and the final optimization target (or termination condition) are input, and the reinforcement learning algorithm sequentially gives an overall compression target parameter (overall compression rate or overall loss) of the current iteration. Wherein, the MAC may also be output, that is, the calculation amount after compression, and the overall compression rate may be further determined by the MAC; according to the overall compression target parameter and the above method for determining the compression parameter of the hidden layer, compression parameters of the set hidden layer may be automatically calculated, and which hidden layers are compressed may also be automatically selected, that is, automatically determining the set hidden layer. In practical applications, when the compressed model does not satisfy the termination condition, the model compression process of each of the above embodiments may be repeated until the termination condition is satisfied and the optimized model is obtained. Wherein, the foregoing termination condition may be set, for example, setting to confirm that the termination condition is satisfied when the MAC of the compressed model is reduced to 50% of the MAC of the original model to be optimized, or setting to confirm that the termination condition is satisfied when the loss of the compressed model has reached to 50% of the loss of the original model to be optimized.

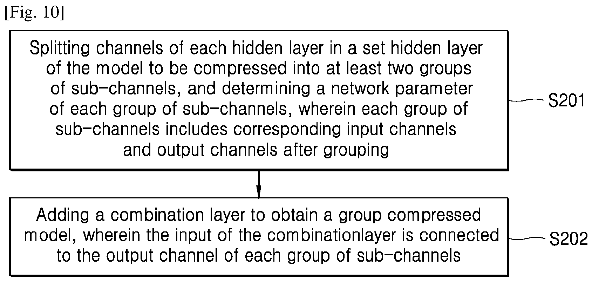

Fig. 10 is a schematic flowchart diagram of a group compression method for a model according to an embodiment of the disclosure.

In the embodiment of the disclosure, in order to obtain a lightweight small learning network with superior performance, a group compression method (also referred to as a group pruning method) for a model is also proposed, as shown in Fig. 10, which includes:

Step S201: splitting channels of each hidden layer in a set hidden layer of the model to be compressed into at least two groups of sub-channels, and determining a network parameter of each group of sub-channels, wherein each group of sub-channels includes corresponding input channels and output channels after grouping;

Step S202: adding a combination layer to obtain a group compressed model, wherein the input of the combination layer is connected to the output channel of each group of sub-channels.

With the group pruning method of the embodiment of the disclosure, a hidden layer may be split into multiple small hidden layers (which may be referred to as a group hidden layer), for example, splitting a convolutional layer or a fully connected layer into multiple group convolutional layers or group fully connected layers, which may prune associations between groups, that is, pruning connections between some channels (the connections between these channels have little influence on network performance), which greatly reduces the calculation amount and the number of parameters of the model.

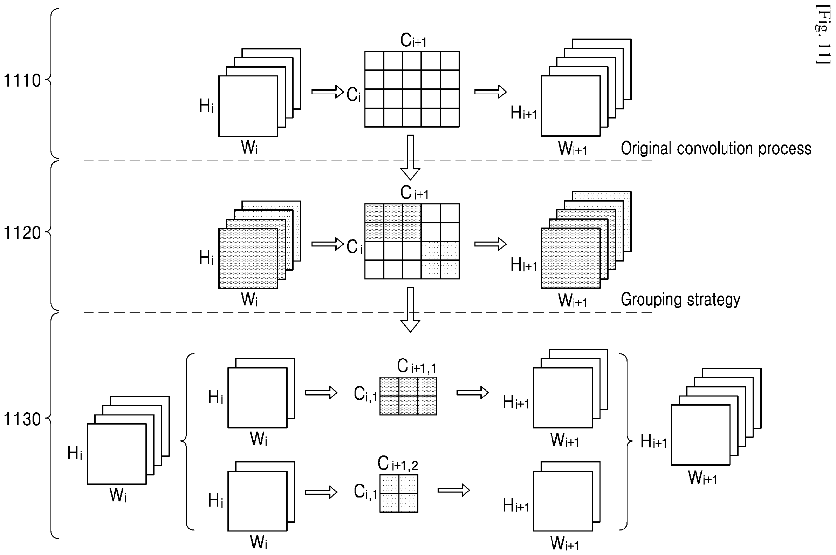

Fig. 11 is a schematic diagram of group pruning according to an embodiment of the disclosure.

According to an embodiment of the disclosure, the network parameters of the hidden layer include the kernel matrix of the layer. Taking that a convolutional layer is split into two groups as an example, as shown in Fig. 11, the first row 1110 is the original convolution process; the second row 1120 is the grouping strategy, and the input feature map, the kernel matrix, and the output feature map are classified into two corresponding groups (in the figure, two groups are taken as examples, which is not limited to two groups), wherein the first two feature maps in the input feature map correspond to the split upper left kernel matrix and the first three feature maps of the output feature map, and the last two feature maps of the input feature map correspond to the split lower right kernel matrix and the last feature maps of the out feature map; the third row 1130 is a convolutional layer that splits the original convolutional layer into two small convolutional layers based on the grouping strategy of the second row, wherein the kernel matrix (that is, the network parameter, also referred to as the network element) in the convolutional layer is split into two small kernel matrices (which may be referred to as network subunits). For the convolution process of the two convolutional layers after the grouping, the input feature map is to be allocated, and the output feature map is also obtained by combining the output of the two convolutional layers.

As an example, in an Xception network, by grouping the convolutional layer (one group with 3*3 convolutional kernels), each convolutional kernel acts on only one channel, thereby reducing a large number of inter-group connections. The embodiment of the disclosure proposes that, in the model optimization, network parameters of the convolutional layer or the fully connected layer in the model may be grouped, such that some connections between the groups that have little influence on network performance may be pruned, and is possible to achieve a model optimization with finer particle granularity.

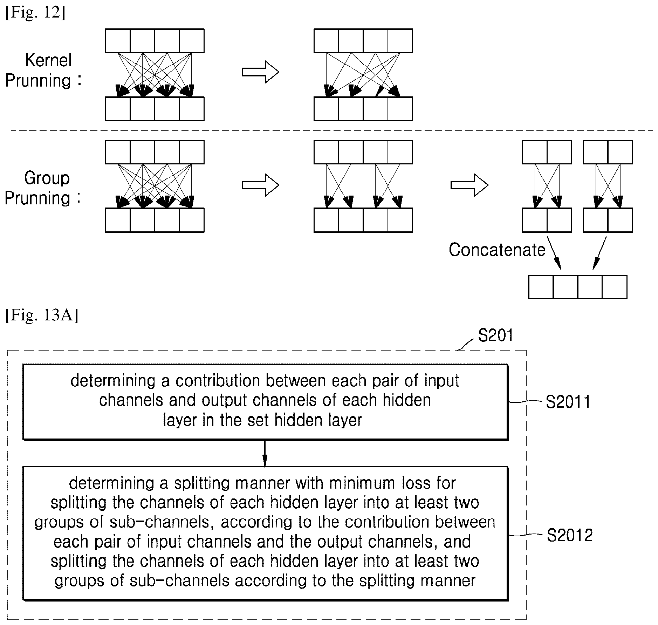

Fig. 12 is a schematic diagram of group pruning process according to an embodiment of the disclosure.

As shown in Fig. 12, comparing the Kernel pruning method with the group pruning method in the embodiment of the disclosure, it may be seen from the figure that the Kernel pruning method may destroy the consistency structure of the network, and needs to implement an additional new layer; the group pruning is to group ordinary convolutional layers or fully connected layers according to network parameters, which may split a layer into multiple layers and prune connections between groups. As compared with Kernel pruning, the group pruning does not need to add an additional new layer, the split layers are also known layers, and may be finally connected through one concatenate layer (corresponding to the above combination layer, the concatenation is an implementation of the combination, and if the combination of the output results of respective layers is performed through the concatenation, then the combination layer may also be referred to as a concatenate layer), to achieve the purpose of acceleration.

Fig. 13a is a flowchart of splitting channels of each hidden layer according to an embodiment of the disclosure.

In particularly, Step S201 specifically includes the following steps:

Step S2011: determining a contribution between each pair of input channels and output channels of each hidden layer in the set hidden layer;

Step S2012: determining a splitting manner with minimum loss for splitting the channels of each hidden layer into at least two groups of sub-channels, according to the contribution between each pair of input channels and the output channels, and splitting the channels of each hidden layer into at least two groups of sub-channels according to the splitting manner.

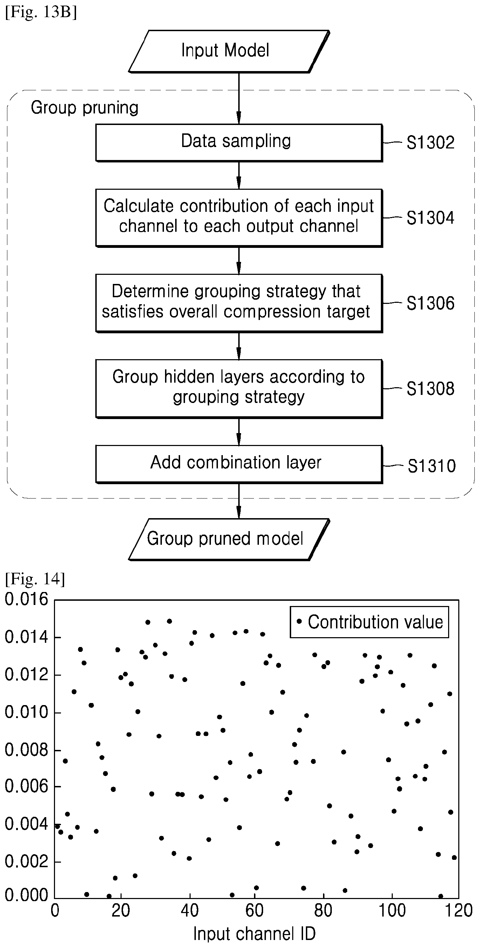

Fig. 13b is a schematic diagram of a group compression process according to an embodiment of the disclosure.

The complete operation flow is shown in Fig.13b. First, the training data is obtained by sampling S1302, and the contribution of each input channel to each output channel is calculated S1304 (that is, Step S2011 is performed respectively for the set hidden layer), and the calculation is performed according to this, to obtain a grouping strategy that satisfies the overall compression target S1306. The corresponding hidden layers are grouped according to the calculated grouping strategy, that is, being classified into multiple groups (i.e., Step S2012) S1308, and a combination layer (e.g., a concatenate layer) is added after the multiple groups to connect the output feature maps in series S1310. Before and after this grouping, the sizes of the input and output feature maps of the module will be unchanged, and will not influence the structure of the entire network.

In the embodiment of the disclosure, a possible implementation manner is provided for Step S2011, and a contribution between each pair of input channels and output channels of each hidden layer is determined, according to a norm of a calculation parameter respectively associated with each pair of input channels and output channels of each hidden layer.

A norm (e.g., L1 norm) of a parameter (a calculation parameter when the output channel is calculated by the input channel, that is, a kernel) associated with each input channel and each output channel is used to represent the contribution, and a larger norm represents a greater contribution.

In the embodiment of the disclosure, a possible implementation manner is further provided for Step S2011: determining a contribution between each pair of input channels and output channels of each hidden layer according to the relationship between the pruning number and the weighted pruning loss related to each output channel and each input channel of each hidden layer respectively by determining a relationship between a pruning number and weighted pruning loss related to each output channel and each input channel of each hidden layer respectively.

Fig. 14 is a relationship map between the pruning number and the weighted pruning loss associated with all input channels on a single output channel according to an embodiment of the disclosure.

Similar to the above method for automatically determining the pruning number, by sampling the data and drawing the relationship map of the pruning number and the weighted pruning loss related to all the input channels on the single output channel n of the ith layer, as shown in Fig. 14, the distribution of contributions of different input channels on a single output channel is shown. The contribution distribution from the nth input channel to the kth output channel on the ith layer are defined as:

$$contrib^{(i)}(n,k) = \frac{\left\|W_{n,k}^{(i)}\right\|_1}{\sum_n \left\|W_{n,k}^{(i)}\right\|_1}$$

$$W_{n,k}^{(i)} = lossc^{(i,k)}(n) - lossc^{(i,k)}(n-1)$$

Wherein, contrib(i)(n, k) is the contributions (normalized value) from the nth input channel to the kth output channel on the ith layer, and lossc(i, k)(n) represents the loss corresponding to pruning n output channels on the kth output channel on the ith layer, the calculation method is similar to the calculation of the previous loss (just sampling on the kth output channel), and W(i)n,k is the contribution from the nth input channel to the kth output channel before normalization.

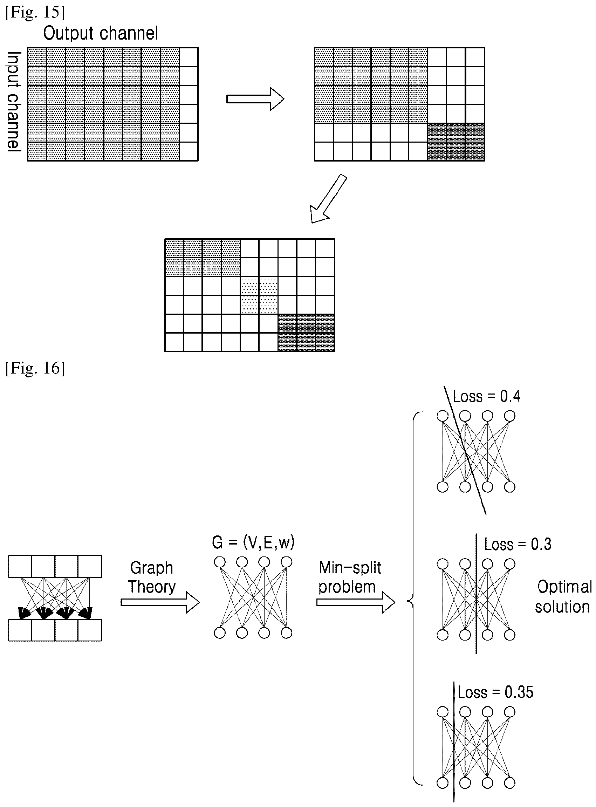

Fig. 15 is a schematic diagram of an iterative group according to an embodiment of the disclosure.

In the embodiment of the disclosure, a possible implementation manner is provided for the Step S2012, and a splitting manner with minimum loss for splitting the channels to be grouped into two groups of sub-channels is determined, wherein the channel to be grouped is a channel of each set hidden layer or at least any one of sub-channels after grouping; that is, as shown in Fig. 15, in an iterative manner, one group is split into two groups at a time, then proceeding to the next grouping for each group, which is repeatedly continued until satisfying the condition.

Fig. 16 is an exemplary diagram of solving a grouping problem by graph theory modeling according to an embodiment of the disclosure.

At each grouping, through the graph theory algorithm, a splitting manner with minimum loss for splitting the channels to be grouped into two groups of sub-channels is determined, as shown in Fig. 16, by using the graph theory method for modeling. First, each input channel and each output channel are treated as a vertex respectively, and there is an edge between each input channel and each output channel, and the weights thereof are the previously calculated contribution values. The optimal grouping method corresponds to a minimum sum of weights of the deleted edges (i.e., the minimum loss in the figure), then the problem is transformed into the minimum split problem in graph theory, which may be solved by classical methods, such as the Stoer-Wagner algorithm. In Fig. 16, after the channels to be grouped is modeled by graph theory, a map G of G = (V, E, w) is obtained, wherein V represents the set of vertices in map G, E represents the set of edges in map G, and w represents the weight of each edge in map G. The map G is solved by the minimum split problem. As an example, the possible obtained solutions include the rightmost column as shown in Fig. 16. In each solution, the map G is split into two groups. The loss of each solution is calculated by removing the relationship of the vertices of the two split groups to obtain the losses corresponding to the three solutions, which are 0.4, 0.3, and 0.35, respectively. The minimum loss 0.3 may be used as the optimal solution, that is, the optimal splitting manner of the channels to be grouped corresponding to the map G is obtained.

Further, after the group compressed model is obtained, the group compressed model may be fine-tuned by a knowledge distillation algorithm. Specifically, the model to be compressed before group compression is selected as a learning model, and the group compressed model is fine-tuned, which the specific implementation may refer to the above description and details are not described herein again.

As compared with a convolutional layer of a general model (that is, the convolutional layer in which each output channel is associated with all input channels), for partial convolutional layers, the group-compressed model obtained by the embodiment of the disclosure prunes association information between the groups by grouping, such that each output channel only connects to a part of the input channels, thereby achieving group convolution, and greatly reducing the calculation amount and the number of parameters of the model.

As compared with the channel-based pruning technology, the technical solution provided by the embodiment of the disclosure may implement a pruning method with finer granularity, and further improve the effect of model compression.

In the embodiment of the disclosure, the group compression method for the model shown in Fig. 10 may be directly applied to the initial model to be optimized, or may be combined with the model optimization method shown in Fig. 1 to perform the following in Step S201 after the model optimization method as shown in Fig. 1 outputs the optimized model: splitting the channels of at least one hidden channel of the optimized model into at least two groups of sub-channels, and determining network parameters of each group of sub-channels, and each group of sub-channels includes corresponding input channel and output channel after grouping; adding the combination layer to obtain the group-compressed model, wherein the input of the combination layer is connected to the output channel of each group of sub-channel. That is, after the pruning and/or quantization, the channels in the convolutional layer or the fully connected layer are further grouped to achieve further compression for the pruned and/or quantized model, and to improve the model compression effect. Wherein, the processing procedure of the optimized model is the same as that of the foregoing respective embodiments corresponding to Fig. 1, and details will not be described herein again.

Wherein, if performing group compression on the optimized model after the model optimization method as shown in Fig. 1 outputs the optimized model, then, when fine-tuning the group-compressed model, an optimized model before group compression may be selected as the learning model, the original model before model optimization may be selected as the learning model, or any historical fine-tuned model in the model optimization stage may be selected as the learning model, to fine-tune the group-compressed model.

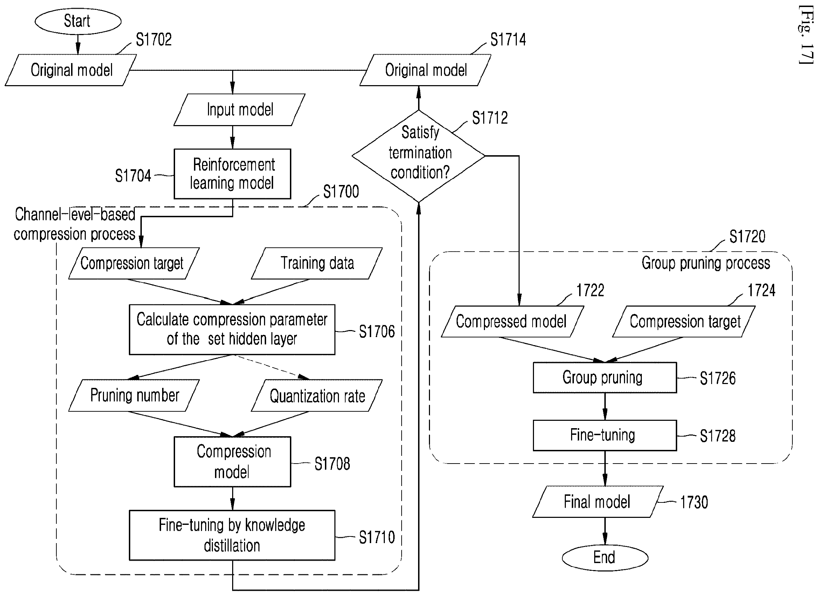

Fig. 17 is a flowchart of a model compression method according to an embodiment of the disclosure.

In combination with the above embodiments, the embodiment of the disclosure further proposes an implementation process. As shown in Fig. 17, the method is a fully automated process, which combines the process of pruning and the process of quantification for operating, and fine-tuning is performed by fully utilizing information of a pre-stage model and through the knowledge distillation technology, and an ordinary convolutional layer or fully connected layer is pruned into group convolutional layers or group fully connected layers by the group pruning method.

Specifically, by giving an original model and the overall compression target, such as a given MAC, that is, the calculation amount after compression, the MAC may further determine the overall compression rate, or by giving the overall loss (representing available information loss), the final compression result is obtain through two stages successively: a channel-level-based compression stage (pruning and quantization), and a group pruning compression stage.

Firstly, in the channel-level-based compression stage S1700, the current neural network model (corresponding to the input model in Fig. 17, also corresponding to the model to be optimized in Fig. 1) is input S1702, and the reinforcement learning module will give an overall compression target through the reinforcement learning algorithm S1704. According to this target and the training data, the compression parameters (the pruning number or/and the quantization rate) of respective set hidden layers (for example, the convolutional layer and fully connected layer) are automatically calculated S1706. Then, according to the compression parameter of each set hidden layer, the set hidden layer is compressed, corresponding to the compression model in the figure S1708; then fine-tuning is performed on the newly obtained model through the knowledge distillation method S1710; finally, if the compressed model does not satisfy the termination condition S1712, the above processes are repeated, that is, repeating the above compression process by using the compressed model as an input model until the termination condition is satisfied S1714, and if the termination condition is satisfied, the next stage is entered.

The second stage is the group pruning compression stage S1720. The model after the previous stage compression 1722 and the overall compression target 1724 are input, and the model is further compressed by the group pruning technology S1726 proposed by the disclosure, and finally the final model 1730 is obtained through the fine-tuning process S1728.

The model compression or optimization method provided by the embodiments of the disclosure may be used in the following application scenes.

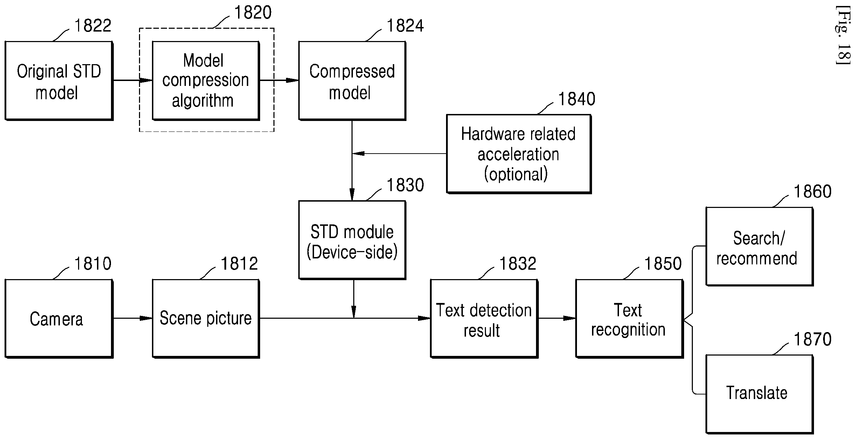

Fig. 18 is an exemplary diagram of a scene text recognition application solution according to an embodiment of the disclosure.

The Scene Text Detection(STD) is to detect text visible in different scenes in the life through a camera 1802, and the detected text 1832 may be handed over to a subsequent recognition module 1850 for practical functions such as searching/recommending 1860, or translating 1870. In order to improve the user experience, it is necessary to increase the detection speed, and the STD should be able to be used in some environments where the network signal is poor. The detection module needs to be deployed on a device side.

An original STD model has a larger size and slow operation speed. Through the technical solution provided by the embodiment of the disclosure, as shown in Fig. 18, the original STD model 1822 is compressed by the above model compression algorithm 1820 provided by the embodiment of the disclosure to obtain the compressed model 1824 (i.e., the optimized model). Further a hardware acceleration technology 1840 (optional) may be used to further accelerate the operation speed of the model. The compressed model is deployed on the device side (corresponding to the device-side module 1830 in the figure, which may also be referred to as a device-side STD module). While in use, the camera 1810 of the terminal device captures a scene picture, to input into the deployed STD module 1830 at the device side and obtain the result of the text detection 1832. Then, in the following, the result 1832 may be input into the text recognition module 1850 to perform text recognition, to obtain subsequent functions such as searching/recommending 1860, or translating 1870 after the text is obtained.

Since the experience is related to the accuracy of the detection for a user, it is also directly related to the speed of the detection. Different strategies may be adopted depending on an actual usage scene. For example, for a simpler scene, the speed of the detection is very important, and the overall compression rate of the model may be set smaller (that is, the calculation amount of the compressed model is smaller and the calculation speed is faster), and then the model compression algorithm 1820 proposed by this solution is used for compression, thereby improving the speed of the detection; for another example, in a more complex scene (scene having rich details and more light and dark changes, etc.), the accuracy of the detection is more important, so the overall loss of the model may be set smaller (that is, the accuracy of the compressed model is higher, and the information loss caused by compression is less than a certain degree), and then the model compression algorithm(1820) proposed by this solution is used for compression, thereby ensuring the accuracy of the detection.

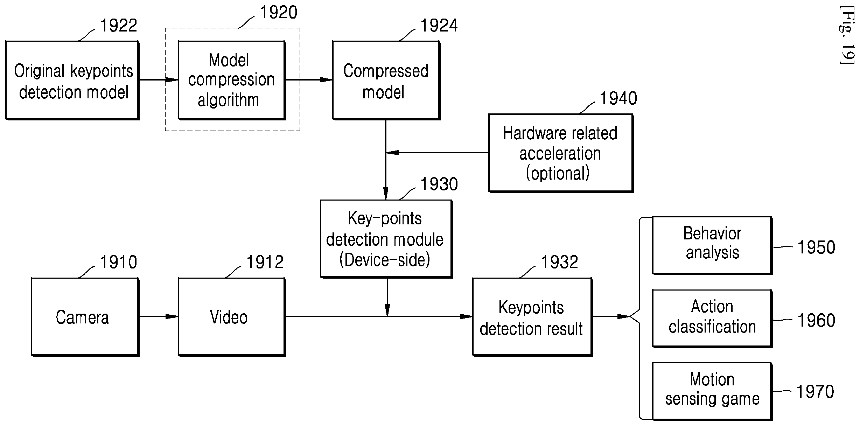

Fig. 19 is an exemplary diagram of a human skeleton keypoints detection solution according to an embodiment of the disclosure.

Human skeleton keypoints detection refers to detecting multiple key positions (pre-set) of a person in the scene, which is the basis of many other computer vision tasks, such as behavior analysis, motion classification, etc., and may also provide assistance for human-computer interaction, auxiliary training, automatic pilot, etc. Every application related to the human skeleton keypoints detection often requires real-time. Meanwhile, the model may be compressed by the technical solution provided by the embodiment of the disclosure, which ensure a certain accuracy while effectively reducing the operating time.

When the original keypoints detection model 1922 is deployed directly on the terminal device, the real-time performance may not satisfy requirements. As shown in Fig. 19, the original keypoints detection model 1922 is compressed by the above model compression algorithm 1920 provided by the embodiment of the disclosure to obtain the compressed model 1924 (i.e., the optimized model), and the operating speed of the model is further accelerated in combination with hardware-related acceleration technology 1940 (optional), and the compressed model 1924 is deployed on the device side to form a keypoints detection module 1930 (corresponding to the device-side module in the figure). While in use, after the camera 1910 of the terminal device collects the video 1912, each frame in the video 1912 is sequentially sent to the keypoints detection module 1930, and after processing, the keypoints detection result 1932 is obtained. The result 1932 may be used in a variety of applications, such as behavior analysis 1950, action classification 1960, motion sensing games 1970, and the like.

In applications of the human skeleton keypoints detection, it is critical to be able to achieve real-time performance. For the device side, especially for devices with weak chip processing capabilities, how to operate the relevant model in real time is the key. The overall compression rate of the model may be set smaller (that is, the calculation amount of the compressed model is smaller, and the calculation speed is faster), and the model is compressed through the model compression algorithm provided by the embodiment of the disclosure, thereby improving the detection speed, and finally a simplified model obtained is deployed on a terminal device (i.e., a mobile phone).

The foregoing model optimization method proposed by the embodiment of the disclosure is applied to an On-device intelligent compression platform, and the platform optimizes the model to be deployed in a terminal device, so that the compressed lightweight model may be normally operated in the terminal device.

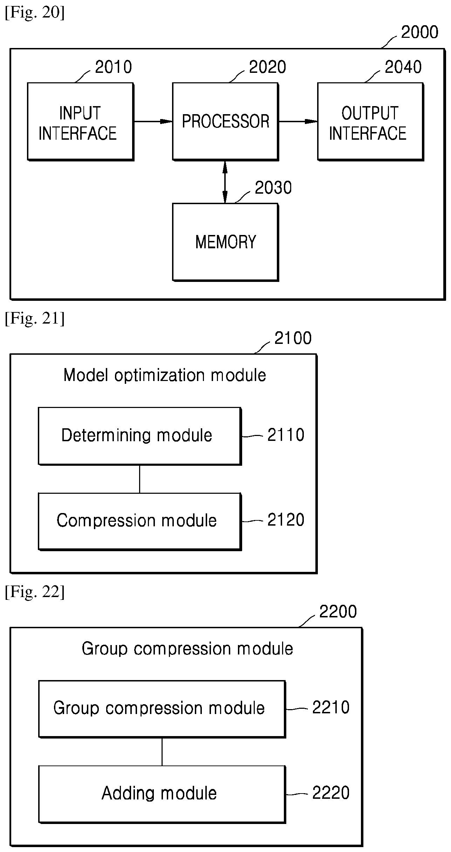

Fig. 20 is a block diagram of an electronic device according to an embodiment of the disclosure.

According to an embodiment of the disclosure, an electronic device (2000) is provided. The electronic device 2000 comprises an input interface 2010, a processor 2020, a memory 2030, and an output interface 2040. At least one of the input interface 2010 or the output interface 2040 may be omitted according to an embodiment.

The input interface 2010 receives input data for a machine learning model which is performed by the processor 2020 by on-device method. According to an embodiment of the disclosure, the input interface 2010 may correspond to a camera 1810 in Fig. 18 or a camera 1910 in Fig. 19. According to another embodiment of the disclosure, the input interface 2010 comprises at least one of a keyboard, a mouse, a touch screen, a touch pad, a button, or etc. According to another embodiment of the disclosure, the input interface 2010 corresponds to a communication interface, and the input interface 2010 receives an input from an external device via a communication network.

According to an embodiment of the disclosure, the input interface 2010 receives an original machine learning model to be compressed or to be optimized. The original machine learning model is input in the form of computer program instructions and parameter sets.

The processor 2020 controls overall operation of the electronic device 2000. The processor 2020 comprises one or more processor. The processor 2020 performs the machine learning model according to embodiments of the disclosure. Also, the processor 2020 performs a model compression algorithm or a model optimization algorithm according to embodiments of the disclosure as explained above. The processor 2020 updates an original model by the model compression algorithm or the model optimization algorithm, generates an updated model, and performs operations based on the updated model. The processor 2020 input an input data from the input interface 2010 into the updated model, and obtains an output data from the updated model.

According to an embodiment of the disclosure, the processor 2020 performs at least one operation of the model compression algorithm 1820, the STD module 1830, the hardware related acceleration 1840, the text recognition 1850, the searching/recommending 1860, or the translation 1870 in Fig. 18. According to another embodiment of the disclosure, the processor 2020 performs at least one operation of the model compression algorithm 1920, the key-points detection module 1930, the hardware related acceleration 1940, the behavior analysis 1950, the action classification 1960, or the motion sensing game 1970.

The processor 2020 may be a CPU, a general-purpose processor, a DSP, an ASIC, and an FPGA or other programmable logic device, transistor logic device, hardware component, or any combination thereof. It is possible to implement or carry out the various illustrative logical blocks, modules and circuits described in connection with the present disclosure. The processor may also be a combination of computing functions, such as one or more microprocessor combinations, a combination of a DSP and a microprocessor, and the like.

The memory 2030 stores data, instructions, commends, or parameters. The memory 2030 may store at least one instruction, at least one program, a code set, or a set of instructions, the at least one instruction, the at least one program, the code set, or the set of instructions being loaded and executed by the processor to implement the corresponding content in the foregoing method embodiments. The memory 2030 may be formed as a volatile or non-volatile memory. The memory 2030 may store the machine learning model. In the memory 2030, nodes or layers of the machine learning model is allocated, and values of parameter sets are stored. The processor 2020 may perform operations of the machine learning model by storing values of nodes or layers in the memory 2030, and using the values of parameter sets stored in the memory 2030.

The memory 2030 may be a ROM or other type of static storage device that may store static information and instructions, RAM or other types of Dynamic storage device that may store information and instruction, may also be EEPROM, CD-ROM or other optical disc storage, optical disc storage (including compression Optical discs, laser discs, optical discs, digital versatile discs, Blu-ray discs, etc.), magnetic disk storage medium or other magnetic storage devices, or any other medium that may be used to carry or store desired program codes in form of instruction or data structure and may be accessed by the computer.

The output interface 2040 outputs a result value of the machine learning model. The output interface 2040 may comprises at least one of a display, a speaker, a touch screen, a printer, or a communication interface. According to an embodiment of the disclosure, at least one of a result of the text recognition 1850, a result of the searching/recommending 1860, or a result of the translating 1870 is output via the output interface 2040. According to another embodiment of the disclosure, at least one of a result of key-points detection 1932, a result of the behavior analysis 1950, a result of the action classification 1960, or a result of the motion sensing game is output via the output interface 2040.

According to an embodiment of the disclosure, the electronic device 2000 may also comprise a transceiver. The processor 2020 is connected to the transceiver, such as via a bus. The electronic device 2000 may comprises one or more transceiver.

The bus may comprise a path for communicating information between the above components. The bus may be a PCI bus or an EISA bus. The bus may be classified into an address bus, a data bus, a control bus, and the like.

Fig. 21 is a schematic structural diagram of a model optimization module according to an embodiment of the disclosure.

According to an embodiment of the disclosure, the processor 2020 comprises a model optimization module 2100. As shown in Fig. 21, the model optimization module 2100 may comprise: a determining module 2110 and a compression module 2120. The determining module 2110 and the compression module 2120 may correspond to a software module or a hardware component. The processor 2020 may execute instructions stored in a memory of the electronic device, and performs operations of the model optimization module 2100.

The determining module 2110 determines a compression parameter of a set hidden layer in a model to be optimized.

The compression module 2120 compresses the model to be optimized based on the compression parameter of the set hidden layer, to obtain an optimized model.

According to an embodiment of the disclosure, if the compression parameter includes a pruning number, the determining module 2110 may determine a relationship between the pruning number of respective channels of each hidden layer in the set hidden layer and corresponding pruning loss of each hidden layer.

Also, according to an embodiment of the disclosure, the determining module may determine the pruning number of each hidden layer, based on the relationship between the pruning number of respective channels of each hidden layer and corresponding pruning loss of each hidden layer.

According to an embodiment of the disclosure, the determining module 2110 may determine a relationship between the pruning number of respective channels and the corresponding pruning loss of a current hidden layer, based on training data of a next hidden layer. A training data of a hidden layer includes a relationship between an output channel of the hidden layer and each input channel of the hidden layer.

According to an embodiment of the disclosure, the determining module 2110 may determine the pruning number of each hidden layer, based on the relationship between the pruning number of respective channels of each hidden layer and the corresponding pruning loss of each hidden layer, and a weight corresponding to the each hidden layer.

According to an embodiment of the disclosure, the determining module 2110 may determine a relationship between the pruning number of respective channels of each hidden layer and the corresponding weighted pruning loss of each hidden layer, based on the relationship between the pruning number of respective channels of each hidden layer and the corresponding pruning loss of each hidden layer, and a weight corresponding to the each hidden layer;

The determining module 2110 may determine the pruning number of each hidden layer, according to the relationship between the pruning number of respective channels of each hidden layer and the corresponding weighted pruning loss of each hidden layer.

According to an embodiment of the disclosure, the determining module 2110 may calculate the pruning loss corresponding to each current candidate channel to be pruned. Any current candidate channel to be pruned includes pruned channels determined by a previous channel pruning number and at least one unpruned channel, or any current candidate channel to be pruned includes remaining pruned channels after removing at least one channel from the pruned channels determined by a previous channel pruning number.

The determining module 2110 may determine a current candidate channel to be pruned with the minimum pruning loss as the pruning channel corresponding to the current channel pruning number, to obtain the relationship between the current channel pruning number and the corresponding pruning loss.

According to an embodiment of the disclosure, if the compression parameter includes a quantization rate, the determining module 2110 may determine a relationship between respective candidate quantization rates of each hidden layer in the set hidden layer and corresponding quantization loss;
The determining module 2110 may determine a quantization rate of each hidden layer based on a relationship between respective candidate quantization rates of each hidden layer and corresponding quantization loss of each hidden layer.

According to an embodiment of the disclosure, the determining module 2110 may determine the relationship between respective candidate quantization rates of each hidden layer and corresponding quantization loss of each hidden layer, based on training data of the current hidden layer. The training data includes a relationship between an output channel of a hidden layer and each input channel of the hidden layer.

According to an embodiment of the disclosure, the determining module 2110 may determine a quantization rate of each hidden layer based on a relationship between respective candidate quantization rates of each hidden layer and corresponding quantization loss of each hidden layer, and a weight corresponding to each hidden layer.

According to an embodiment of the disclosure, the determining module 2110 may determine a relationship between respective candidate quantization rates of each hidden layer and corresponding weighted quantization loss of each hidden layer, based on the relationship between respective candidate quantization rates of each hidden layer and corresponding quantization loss of each hidden layer, and a weight corresponding to each hidden layer;
The determining module 2110 may determine a quantization rate of each hidden layer, based on the relationship between respective candidate quantization rates of each hidden layer and corresponding weighted quantization loss of each hidden layer.

According to an embodiment of the disclosure, if one current hidden layer corresponds to one next hidden layer, the weight of the current hidden layer is the same as the weight of the next hidden layer.

If a current hidden layer corresponds to least two next hidden layers, the weight of the current hidden layer is the sum of the weights of at least two next hidden layers.

If at least two current hidden layers correspond to one next hidden layer, the weight of each current hidden layer is the weight of the next hidden layer allocated according to a channel proportion of each current hidden layer.

According to an embodiment of the disclosure, the determining module 2110 may determine the compression parameter of the set hidden layer, based on a loss relationship and an overall compression target parameter of the model.

If the compression parameter is a pruning number, then the loss relationship includes a relationship between the pruning number of respective channels of each hidden layer in the set hidden layer and the corresponding weighted pruning loss of each hidden layer.

If the compression parameter is a quantization rate, then the loss relationship includes a relationship between respective candidate quantization rates of each hidden layer in the set hidden layer and corresponding weighted quantization loss of each hidden layer.

If the compression parameter includes a pruning number and a quantization rate, then the loss relationship includes a relationship between the pruning number of respective channels of each hidden layer in the set hidden layer and the corresponding weighted pruning loss of each hidden layer, and a relationship between respective candidate quantization rates of each hidden layer in the set hidden layer and corresponding weighted quantization loss of each hidden layer.

According to an embodiment of the disclosure, the overall compression target parameter includes an overall compression rate of the model and/or an overall loss of the model.

According to an embodiment of the disclosure, the determining module 2110 may calculate a compression parameter of each set hidden layer that minimizes the overall loss of the model based on the loss relationship and the overall compression rate of the model.

The determining module 2110 may calculate a compression parameter of each set hidden layer that maximizes the overall compression rate of the model based on the loss relationship and the overall loss of the model.

According to an embodiment of the disclosure, the compression module 2120 may select at least one of the following models as a learning model: a model before compression; a model after compressing at least one hidden layer; a model after historical fine-tuning.

The compression module 2120 may fine-tune the compressed model according to the learning model to obtain the optimized model.

According to an embodiment of the disclosure, the compression module 2120 may repeatedly perform, if the fine-tuned model does not satisfy a preset condition, the steps of determining the compression parameter of the set hidden layer in the model to be optimized, compressing the model to be optimized according to the compression parameter of the set hidden layer, and the step of fine-tuning the compressed model according to the learning model, until the fine-tuned model satisfies the preset condition, to obtain the optimized model.

According to an embodiment of the disclosure, the determining module 2110 may determine an overall compression rate of the model and an overall loss of the model by using a reinforcement learning algorithm.

According to an embodiment of the disclosure, the compression module 2120 may split channels of at least one hidden layer of the optimized model into at least two groups of sub-channels, and determine a network parameter of each group of sub-channels. Each group of sub-channels includes corresponding input channels and output channels after grouping.

The compression module 2120 may add a combination layer to obtain a group compressed model. The input of the combination layer is connected to the output channel of each group of sub-channels.

It can be clearly understood by those skilled in the art that the implementation principle and technical effects of the model optimization module 2100 provided by the embodiments of the disclosure are similar to those of the previous method embodiments. The embodiments of the disclosure for the previous method embodiments may be applied to the embodiments of the model optimization module 2100, and the embodiments of the disclosure for the model optimization module 2100 may be applied to the embodiments of the disclosure for the method. For the convenience and brevity of the description, where the device embodiment is not mentioned, reference may be made to the above method embodiments, and details are not described herein again.

Fig. 22 is a schematic structural diagram of a group compression module for a model according to an embodiment of the disclosure.

According to an embodiment of the disclosure, the processor 2020 comprises a group compression module 2200. As shown in Fig. 22, the group compression module 2200 may comprise: a group compression module 2210 and a adding module 2220. The group compression module 2210 and the adding module 2220 may correspond to a software module or a hardware component. The processor 2020 may execute instructions stored in a memory of the electronic device, and performs operations of the group compression module 2200.

As shown in Fig. 22, the group compression module 2200 may comprise a group compression module 2210 and an adding module 2220.

The group compression module 2210 may split channels of each hidden layer in a set hidden layer of the model to be compressed into at least two groups of sub-channels, and determine a network parameter of each group of sub-channels. Each group of sub-channels may comprise corresponding input channels and output channels after grouping.

The adding module 2220 may add a combination layer to obtain a group compressed model. The input of the combination layer is connected to the output channel of each group of sub-channels.

According to an embodiment of the disclosure, the group compression module 2210 may determine a contribution between each pair of input channels and output channels of each hidden layer.

The group compression module 2210 may determine a splitting manner with minimum loss for splitting the channels of each hidden layer into at least two groups of sub-channels, based on the contribution between each pair of input channels and the output channels, and splitting the channels of each hidden layer into at least two groups of sub-channels according to the splitting manner.

According to an embodiment of the disclosure, the group compression module 2210 may determine a contribution between each pair of input channels and output channels of each hidden layer, according to a norm of a calculation parameter respectively associated with each pair of input channels and output channels of each hidden layer.

Also, the group compression module 2210 may determine a relationship between a pruning number and weighted pruning loss associated with each output channel and each input channel of each hidden layer. Also, the group compression module 2210 may determine a contribution between each pair of input channels and output channels of each hidden layer based on the relationship between the pruning number and the weighted pruning loss associated with each output channel and each input channel of each hidden layer.

According to an embodiment of the disclosure, the group compression module 2210 may determine a splitting manner with minimum loss for splitting the channels to be grouped into two groups of sub-channels. The channel to be grouped is a channel of each set hidden layer or at least any one of sub-channels after grouping.

According to an embodiment of the disclosure, the group compression module 2210 may determine a splitting manner with minimum loss for splitting the channels to be grouped into two group of sub-channels through the graph theory algorithm.

According to an embodiment of the disclosure, the group compression module 2200 further comprises a fine-tuning module, configured to select a model to be compressed as a learning model, and perform the fine-tuning process on the group compressed model.

It can be clearly understood by those skilled in the art that the implementation principle and produced technical effects of the group compression module 2200 for a model provided by the embodiments of the disclosure are similar to the previous method embodiments. The embodiments of the disclosure for the previous method embodiments may be applied to the embodiments of the group compression module 2200, and the embodiments of the disclosure for the group compression module 22may be applied to the embodiments of the disclosure for the method. For the convenience and brevity of the description, where the device embodiment is not mentioned, reference may be made to the above method embodiments, and details are not described herein again.

The embodiments may be implemented in a software program including instructions stored in a computer-readable storage medium. The computer-readable storage medium may store computer instructions, when operated on a computer, enable the computer to execute the corresponding content in the foregoing method embodiments.

The computer is a device capable of calling the stored instructions from the storage medium and operating according to the embodiments in accordance with the called instructions, and may include the electronic according to the embodiments.

The computer-readable storage medium may be provided in the form of a non-transitory storage medium. Here, the term 'non-transitory' means that the storage medium is tangible and does not refer to a transitory electrical signal, but does not distinguish that data is stored semi-permanently or temporarily on the storage medium.

Furthermore, the electronic device and the method for compressing a machine learning model according to the embodiments may be provided in a computer program product. The computer program product may be traded between a seller and a purchaser as a commodity.

The computer program product may include a software program and a computer-readable storage medium having stored thereon the software program. For example, the computer program product may include a product (e.g. a downloadable application) in a software program distributed electronically through a manufacturer of the electronic device or an electronic market (e.g., Google Play Store and App Store). For electronic distribution, at least a part of the software program may be stored on the storage medium or may be generated temporarily. In this case, the storage medium may be a storage medium of a server of the manufacturer, a server of the electronic market, or a relay server for temporarily storing the software program.

The computer program product may include a storage medium of a server or a storage medium of a terminal, in a system including the server and the terminal (e.g., the ultrasound diagnosis apparatus). Alternatively, when there is a third device (e.g., a smartphone) that communicates with the server or the terminal, the computer program product may include a storage medium of the third device. Alternatively, the computer program product may include a software program that is transmitted from the server to the terminal or the third device or from the third device to the terminal.

In this case, one of the server, the terminal, and the third device may perform the method according to the embodiments by executing the computer program product. Alternatively, at least two of the server, the terminal, and the third device may divide and perform the method according to the embodiments by executing the computer program product.

For example, the server (e.g., a cloud server, an AI server, or the like) may execute the computer program product stored in the server, thereby controlling the terminal to perform the method according to the embodiments, the terminal communicating with the server.

As another example, the third device may execute the computer program product, thereby controlling the terminal to perform the method according to the embodiments, the terminal communicating with the terminal.

As another example, the third device may directly perform, by executing the computer program product, the method according to the embodiments based on a value input from an auxiliary device (e.g., a probe of a medical apparatus).

When the third device executes the computer program product, the third device may download the computer program product from the server, and may execute the downloaded computer program product. Alternatively, the third device may perform the method according to the embodiments by executing a pre-loaded computer program product.

It should be understood that although the various steps in the flowchart of the drawings are sequentially displayed as indicated by the arrows, these operations are not necessarily performed in the order indicated by the arrows. Except as explicitly stated herein, the execution of these operations is not strictly limited, and may be performed in other sequences. Moreover, at least some of the operations in the flowcharts of the drawings may include multiple sub-operations or stages, which are not necessarily performed at the same time, but may be executed at different times, and the order of execution thereof is not necessarily to be performed sequentially, but may be performed alternately or alternately with at least a portion of the sub-operations or stages of other operations or other operations.

The above is only a part of the embodiments of the disclosure, and it should be noted that those skilled in the art may also make several improvements and retouching without departing from the scope of the disclosure.

**Claims**

1. An on-device method for compressing a machine learning model by an electronic device, comprising:

   determining a pruning number for each of a plurality of channels included in a set hidden layer of the machine learning model, the machine learning model comprises a convolutional neural network that comprises a plurality of hidden layers including the set hidden layer, the set hidden layer comprises one or more hidden layers set in respective hidden layers;
   determining a pruning loss of each hidden layer in the set hidden layer based on the determined pruning number of the respective channels included in each hidden layer in the set hidden layer;
   determining a compression parameter of the set hidden layer in the model;
   compressing the model based on the determined compression parameter of the set hidden layer,
   wherein the compression parameter is related to a pruning of the model and comprises a pruning number of each hidden layer in the set hidden layer, and
   wherein the determining the compression parameter of the set hidden layer in the model is based on the pruning number of the respective channels included in each hidden layer in the set hidden layer and the pruning loss of each hidden layer in the set hidden layer of the model, the determining the compression parameter of the set hidden layer comprises:

      determining a relationship between the pruning number of the respective channels of each hidden layer in the set hidden layer and the corresponding pruning loss of each hidden layer in the set hidden layer; and
      determining the pruning number of each hidden layer, by solving an optimization problem based on an overall compression target and the relationship between the pruning number of the respective channels of each hidden layer in the set hidden layer and the corresponding pruning loss of each hidden layer in the set hidden layer,

      wherein the machine learning model corresponds to at least one of a scene text detection model which detects text visible in scenes or a keypoints detection model which detects multiple pre-set key positions of a person in a scene.

2. The on-device method of claim 1, wherein, the determining the relationship between the pruning number of the respective channels of each hidden layer in the set hidden layer and the corresponding pruning loss of each hidden layer in the set hidden layer, comprises:

   determining a relationship between the pruning number of the respective channels of a current hidden layer and the corresponding pruning loss of the current hidden layer, based on training data of at least one next hidden layer to the current hidden layer;
   wherein the training data comprises a relationship between an output channel of the at least one next hidden layer and each input channel of the at least one next hidden layer.

3. The on-device method of claim 1, wherein, the determining the pruning number of each hidden layer, based on the relationship between the pruning number of the respective channels of each hidden layer in the set hidden layer and the corresponding pruning loss of each hidden layer in the set hidden layer, comprises:
   determining the pruning number of each hidden layer, based on a relationship between the pruning number of the respective channels of each hidden layer in the set hidden layer and the corresponding pruning loss of each hidden layer in the set hidden layer, and a weight corresponding to each hidden layer in the set hidden layer.

4. The on-device method of claim 3, wherein, the determining the pruning number of each hidden layer, based on the relationship between the pruning number of the respective channels of each hidden layer in the set hidden layer and the corresponding pruning loss of each hidden layer in the set hidden layer, and the weight corresponding to each hidden layer, comprises:

   determining a relationship between the pruning number of the respective channels of each hidden layer and a corresponding weighted pruning loss of each hidden layer, based on the relationship between the pruning number of the respective channels of each hidden layer and the corresponding pruning loss of each hidden layer, and the weight corresponding to each hidden layer; and
   determining the pruning number of each hidden layer, based on the relationship between the pruning number of respective channels of each hidden layer and the corresponding weighted pruning loss of each hidden layer.

5. The on-device method of claim 1, wherein, the determining the relationship between the pruning number of the respective channels of each hidden layer and the corresponding pruning loss of each hidden layer, comprises:

   calculating, using an incremental manner or a decreasing manner, the pruning loss of each current candidate channel to be pruned respectively,

      wherein the incremental manner includes any current candidate channel to be pruned comprising a pruning number that includes the pruning numbers of each of the pruned channels determined by a previous channel pruning number and at least one unpruned channel, and
      wherein the decreasing manner includes any current candidate channel to be pruned comprising a pruning number that corresponds to remaining pruned channels after removing at least one channel from pruned channels determined by a previous channel pruning number; and

   determining a current candidate channel to be pruned with a minimum pruning loss as the pruned channel corresponding to the current channel determined by the previous channel pruning number, to obtain the relationship between the current channel pruning number and the corresponding pruning loss of each hidden layer in the set hidden layer.

6. The on-device method of claim 1, wherein, the compression parameter comprises a quantization rate, and wherein the determining the compression parameter of the set hidden layer in the model, comprises:

   determining a relationship between respective candidate quantization rates of each hidden layer in the set hidden layer and corresponding quantization loss of each hidden layer; and
   determining a quantization rate of each hidden layer based on the relationship between the respective candidate quantization rates of each hidden layer and the corresponding quantization loss of each hidden layer.

7. The on-device method of claim 6, wherein the determining the relationship between the respective candidate quantization rates of each hidden layer and the corresponding quantization loss of each hidden layer, comprises:

> determining the relationship between respective candidate quantization rates of each hidden layer and the corresponding quantization loss of each hidden layer, based on training data of a current hidden layer; and
> wherein, the training data of the current hidden layer comprises a relationship between an output channel of the current hidden layer and each input channel of the current hidden layer.

8. The on-device method of claim 6, wherein the determining the quantization rate of each hidden layer based on the relationship between the respective candidate quantization rates of each hidden layer and the corresponding quantization loss of each hidden layer, comprises:
determining the quantization rate of each hidden layer based on a relationship between the respective candidate quantization rates of each hidden layer and the corresponding quantization loss of each hidden layer, and a weight corresponding to each hidden layer.

9. The on-device method of claim 8, wherein the determining the quantization rate of each hidden layer based on the relationship between respective candidate quantization rates of each hidden layer and the corresponding quantization loss of each hidden layer, and the weight corresponding to each hidden layer, comprises:

> determining a relationship between the respective candidate quantization rates of each hidden layer and a corresponding weighted quantization loss of each hidden layer, based on the relationship between the respective candidate quantization rates of each hidden layer and the corresponding quantization loss, and the weight corresponding to each hidden layer; and
> determining the quantization rate of each hidden layer, based on the relationship between the respective candidate quantization rates of each hidden layer and the corresponding weighted quantization loss of each hidden layer.

10. The on-device method of claim 3, wherein

> if a current hidden layer corresponds one-to-one to a next hidden layer, the weight of the current hidden layer is the same as the weight of the next hidden layer;
> if the current hidden layer corresponds to at least two next hidden layers by a multi-out structure, the weight of the current hidden layer is the sum of the weights of at least two next hidden layers; and
> if at least two current hidden layers correspond to one next hidden layer by a multi-in structure, the weight of each current hidden layer is the weight of the next hidden layer allocated according to a channel proportion of each current hidden layer.

11. The on-device method of claim 1, wherein the determining the compression parameter of the set hidden layer in the model, comprises:
determining the compression parameter of the set hidden layer, based on a loss relationship and the overall compression target parameter of the model;

> wherein, if the compression parameter is the pruning number, the loss relationship comprises a relationship between the pruning number of the respective channels of each hidden layer in the set hidden layer in the model and a corresponding weighted pruning loss of each hidden layer in the set hidden layer, the weighted pruning loss being a product of weights of each hidden layer and the pruning loss of each hidden layer; and
> if the compression parameter comprises the pruning number and a quantization rate, then the loss relationship comprises a relationship between the pruning number of the respective channels of each hidden layer in the set hidden layer and a corresponding weighted pruning loss of each hidden layer in the set hidden layer, and a relationship between respective candidate quantization rates of each hidden layer in the set hidden layer and a corresponding weighted quantization loss of each hidden layer, the weighted pruning loss being a product of weights of each hidden layer and the pruning loss of each hidden layer and the weighted quantization loss being a product of weights of each hidden layer and a quantization loss of each hidden layer.

12. The on-device method of claim 11, wherein the overall compression target parameter comprises at least one of an overall compression rate of the model or an overall loss of the model.

13. An electronic device (2000), comprising:

an input interface (2010);
an output interface (2040);
at least one processor (2020); and
a memory (2030) storing at least one instruction,
wherein the input interface (2010) is configured to receive a machine learning model to be compressed by an on-device method,
wherein the at least one processor is configured to, by executing the at least one instruction,

determine a pruning number for each of a plurality of channels included in a set hidden layer of the machine learning model, the machine learning model comprising a plurality of hidden layers including the set hidden layer and the set hidden layer comprising one or more hidden layers set in respective hidden layers;
determine a pruning loss of each hidden layer in the set hidden layer based on the determined pruning number of the respective channels included in each hidden layer in the set hidden layer;
determine a compression parameter of the set hidden layer in the model;
compress the model based on the determined compression parameter of the set hidden layer,
wherein the compression parameter is related to a pruning of the model and comprising a pruning number of each hidden layer in the set hidden layer, and
wherein the compression parameter of the set hidden layer is determined based on the pruning number of the respective channels included in each hidden layer in the set hidden layer and the pruning loss of each hidden layer in the set hidden layer of the model,

wherein the at least one processor is configured to, by executing the at least one instruction,

determine a relationship between the pruning number of the respective channels of each hidden layer in the set hidden layer and the corresponding pruning loss of each hidden layer in the set hidden layer;
determine the pruning number of each hidden layer, by solving an optimization problem based on an overall compression target and the relationship between the pruning number of respective channels of each hidden layer in the set hidden layer and the corresponding pruning loss of each hidden layer in the set hidden layer, wherein the machine learning model corresponds to at least one of a scene text detection model which detects text visible in scenes or a keypoints detection model which detects multiple pre-set key positions of a person in a scene.

14. A computer readable storage medium comprising a non-transitory computer-readable storage medium storing computer program codes which, when executed by a computer, causes the computer to perform an on-device method for compressing a machine learning model of claim 1.

**Patentansprüche**

1. Vorrichtungsinternes Verfahren zum Komprimieren eines Maschinenlernmodells durch eine elektronische Vorrichtung, Folgendes umfassend:

Bestimmen einer Pruning-Zahl für jeden einer Vielzahl von Kanälen, die in einer eingestellten versteckten Schicht des Maschinenlernmodells enthalten sind, wobei das Maschinenlernmodell ein neuronales Faltungsnetz umfasst, das eine Vielzahl von versteckten Schichten einschließlich der eingestellten versteckten Schicht umfasst, wobei die eingestellte versteckte Schicht eine oder mehrere versteckte Schichten umfasst, die in entsprechenden versteckten Schichten eingestellt sind;
Bestimmen eines Pruning-Verlustes jeder versteckten Schicht in der eingestellten versteckten Schicht basierend auf der bestimmten Pruning-Zahl der jeweiligen Kanäle, die in jeder versteckten Schicht in der eingestellten versteckten Schicht enthalten sind;
Bestimmen eines Komprimierungsparameters der eingestellten versteckten Schicht im Modell;
Komprimieren des Modells basierend auf dem bestimmten Komprimierungsparameter der eingestellten versteckten Schicht,
wobei der Komprimierungsparameter mit einem Pruning des Modells zusammenhängt und eine Pruning-Zahl für jede versteckte Schicht in der eingestellten versteckten Schicht umfasst, und
wobei das Bestimmen des Komprimierungsparameters der eingestellten versteckten Schicht in dem Modell auf der Pruning-Zahl der jeweiligen Kanäle, die in jeder versteckten Schicht in der eingestellten versteckten Schicht enthalten sind, und dem Pruning-Verlust jeder versteckten Schicht in der eingestellten versteckten Schicht des Modells basiert, wobei das Bestimmen des Komprimierungsparameters der eingestellten versteckten Schicht Folgendes umfasst:

Bestimmen einer Beziehung zwischen der Pruning-Zahl der jeweiligen Kanäle jeder versteckten Schicht in der eingestellten versteckten Schicht und dem entsprechenden Pruning-Verlust jeder versteckten Schicht in der eingestellten versteckten Schicht; und
Bestimmen der Pruning-Zahl jeder versteckten Schicht durch Lösen eines Optimierungsproblems basierend auf einem Gesamtkomprimierungsziel und der Beziehung zwischen der Pruning-Zahl der jeweiligen Kanäle jeder versteckten Schicht in der eingestellten versteckten Schicht und dem entsprechenden Pruning-Verlust jeder versteckten Schicht in der eingestellten versteckten Schicht,

wobei das Maschinenlernmodell mindestens einem von einem Szenentexterfassungsmodell, das in Szenen sichtbaren Text erfasst, oder einem Hauptpunkterfassungsmodell, das mehrere voreingestellte Hauptpositionen einer Person in einer Szene erkennt, entspricht.

2. Vorrichtungsinternes Verfahren nach Anspruch 1, wobei das Bestimmen der Beziehung zwischen der Pruning-Zahl der jeweiligen Kanäle jeder versteckten Schicht in der eingestellten versteckten Schicht und dem entsprechenden Pruning-Verlust jeder versteckten Schicht in der eingestellten versteckten Schicht Folgendes umfasst:

Bestimmen einer Beziehung zwischen der Pruning-Zahl der jeweiligen Kanäle einer aktuellen versteckten Schicht und dem entsprechenden Pruning-Verlust der aktuellen versteckten Schicht, basierend auf Trainingsdaten von mindestens einer nächsten versteckten Schicht zur aktuellen versteckten Schicht;
wobei die Trainingsdaten eine Beziehung zwischen einem Ausgabekanal der mindestens einen nächsten versteckten Schicht und jedem Eingabekanal der mindestens einen nächsten versteckten Schicht umfassen.

3. Vorrichtungsinternes Verfahren nach Anspruch 1, wobei das Bestimmen der Pruning-Zahl jeder versteckten Schicht basierend auf der Beziehung zwischen der Pruning-Zahl der jeweiligen Kanäle jeder versteckten Schicht in der eingestellten versteckten Schicht und dem entsprechenden Pruning-Verlust jeder versteckten Schicht in der eingestellten versteckten Schicht Folgendes umfasst:
Bestimmen der Pruning-Zahl jeder versteckten Schicht, basierend auf einer Beziehung zwischen der Pruning-Zahl der jeweiligen Kanäle jeder versteckten Schicht in der eingestellten versteckten Schicht und dem entsprechenden Pruning-Verlust jeder versteckten Schicht in der eingestellten versteckten Schicht, und einem Gewicht, das jeder versteckten Schicht in der eingestellten versteckten Schicht entspricht.

4. Vorrichtungsinternes Verfahren nach Anspruch 3, wobei das Bestimmen der Pruning-Zahl jeder versteckten Schicht basierend auf der Beziehung zwischen der Pruning-Zahl der jeweiligen Kanäle jeder versteckten Schicht in der eingestellten versteckten Schicht und dem entsprechenden Pruning-Verlust jeder versteckten Schicht in der eingestellten versteckten Schicht und dem jeder versteckten Schicht entsprechenden Gewicht Folgendes umfasst:

Bestimmen einer Beziehung zwischen der Pruning-Zahl der jeweiligen Kanäle jeder versteckten Schicht und einem entsprechenden gewichteten Pruning-Verlust jeder versteckten Schicht, basierend auf der Beziehung zwischen der Pruning-Zahl der jeweiligen Kanäle jeder versteckten Schicht und dem entsprechenden Pruning-Verlust jeder versteckten Schicht und dem jeder versteckten Schicht entsprechenden Gewicht; und
Bestimmen der Pruning-Zahl jeder versteckten Schicht, basierend auf der Beziehung zwischen der Pruning-Zahl der jeweiligen Kanäle jeder versteckten Schicht und dem entsprechenden gewichteten Pruning-Verlust jeder versteckten Schicht.

5. Vorrichtungsinternes Verfahren nach Anspruch 1, wobei das Bestimmen der Beziehung zwischen der Pruning-Zahl der jeweiligen Kanäle jeder versteckten Schicht und dem entsprechenden Pruning-Verlust jeder versteckten Schicht Folgendes umfasst:

Berechnen des Pruning-Verlustes jedes aktuellen, zu schneidenden Kandidatenkanals auf inkrementelle oder abnehmende Weise,

wobei die inkrementelle Weise jeden aktuellen, zu schneidenden Kandidatenkanal umfasst, der eine Pruning-Zahl umfasst, die die Pruning-Zahlen jedes der geschnittenen Kanäle, die durch eine vorherige Kanal-Pruning-Zahl bestimmt werden, und mindestens einen ungeschnittenen Kanal umfasst, und
wobei die abnehmende Weise jeden aktuellen zu schneidenden Kandidatenkanal umfasst, der eine Pruning-Zahl umfasst, die den verbleibenden geschnittenen Kanälen entspricht, nachdem mindestens ein Kanal aus den geschnittenen Kanälen entfernt wurde, der durch eine vorherige Kanal-Pruning-Zahl bestimmt wurde; und

Bestimmen eines aktuellen Kandidatenkanals, der mit einem minimalen Pruning-Verlust geschnitten werden soll, als der geschnittene Kanal, der dem aktuellen Kanal entspricht, der durch die vorherige Kanal-Pruning-Zahl bestimmt wird, um die Beziehung zwischen der aktuellen Kanal-Pruning-Zahl und dem entsprechenden Pruning-Verlust jeder versteckten Schicht in der eingestellten versteckten Schicht zu erhalten.

6. Vorrichtungsinternes Verfahren nach Anspruch 1, wobei der Komprimierungsparameter eine Quantisierungsrate umfasst, und
wobei das Bestimmen des Komprimierungsparameters der eingestellten versteckten Schicht in dem Modell Folgendes umfasst:

Bestimmen einer Beziehung zwischen den jeweiligen Kandidatenquantisierungsraten jeder versteckten Schicht in der eingestellten versteckten Schicht und dem entsprechenden Quantisierungsverlust jeder versteckten Schicht; und
Bestimmen einer Quantisierungsrate jeder versteckten Schicht basierend auf der Beziehung zwischen den jeweiligen Kandidatenquantisierungsraten jeder versteckten Schicht und dem entsprechenden Quantisierungsverlust jeder versteckten Schicht.

7. Vorrichtungsinternes Verfahren nach Anspruch 6, wobei das Bestimmen der Beziehung zwischen den jeweiligen Kandidatenquantisierungsraten jeder versteckten Schicht und dem entsprechenden Quantisierungsverlust jeder versteckten Schicht Folgendes umfasst:

Bestimmen der Beziehung zwischen den jeweiligen Kandidatenquantisierungsraten jeder versteckten Schicht und dem entsprechenden Quantisierungsverlust jeder versteckten Schicht, basierend auf den Trainingsdaten einer aktuellen versteckten Schicht; und
wobei die Trainingsdaten der aktuellen versteckten Schicht eine Beziehung zwischen einem Ausgabekanal der aktuellen versteckten Schicht und jedem Eingabekanal der aktuellen versteckten Schicht umfassen.

8. Vorrichtungsinternes Verfahren nach Anspruch 6, wobei das Bestimmen der Quantisierungsrate jeder versteckten Schicht basierend auf der Beziehung zwischen den jeweiligen Kandidatenquantisierungsraten jeder versteckten Schicht und dem entsprechenden Quantisierungsverlust jeder versteckten Schicht Folgendes umfasst:
Bestimmen der Quantisierungsrate jeder versteckten Schicht basierend auf einer Beziehung zwischen den jeweiligen Kandidatenquantisierungsraten jeder versteckten Schicht und dem entsprechenden Quantisierungsverlust jeder versteckten Schicht und einem jeder versteckten Schicht entsprechenden Gewicht.

9. Vorrichtungsinternes Verfahren nach Anspruch 8, wobei das Bestimmen der Quantisierungsrate jeder versteckten Schicht basierend auf der Beziehung zwischen den jeweiligen Kandidatenquantisierungsraten jeder versteckten Schicht und dem entsprechenden Quantisierungsverlust jeder versteckten Schicht und dem jeder versteckten Schicht entsprechenden Gewicht Folgendes umfasst:

Bestimmen einer Beziehung zwischen den jeweiligen Kandidatenquantisierungsraten jeder versteckten Schicht und einem entsprechenden gewichteten Quantisierungsverlust jeder versteckten Schicht, basierend auf der Beziehung zwischen den jeweiligen Kandidatenquantisierungsraten jeder versteckten Schicht und dem entsprechenden Quantisierungsverlust und dem jeder versteckten Schicht entsprechenden Gewicht; und
Bestimmen der Quantisierungsrate jeder versteckten Schicht basierend auf der Beziehung zwischen den jeweiligen Kandidatenquantisierungsraten jeder versteckten Schicht und dem entsprechenden gewichteten Quantisierungsverlust jeder versteckten Schicht.

10. Vorrichtungsinternes Verfahren nach Anspruch 3, wobei

wenn eine aktuelle versteckte Schicht eins-zu-eins einer nächsten versteckten Schicht entspricht, ist das Gewicht der aktuellen versteckten Schicht dasselbe wie das Gewicht der nächsten versteckten Schicht;
wenn die aktuelle versteckte Schicht mindestens zwei nächsten versteckten Schichten durch eine Struktur mit mehreren Ausgängen entspricht, ist das Gewicht der aktuellen versteckten Schicht die Summe der Gewichte von mindestens zwei nächsten versteckten Schichten; und

wenn mindestens zwei aktuelle versteckte Schichten einer nächsten versteckten Schicht durch eine Struktur mit mehreren Eingängen entsprechen, ist das Gewicht jeder aktuellen versteckten Schicht das Gewicht der nächsten versteckten Schicht, das entsprechend einem Kanalanteil jeder aktuellen versteckten Schicht zugewiesen wird.

11. Vorrichtungsinternes Verfahren nach Anspruch 1, wobei das Bestimmen des Komprimierungsparameters der eingestellten versteckten Schicht in dem Modell Folgendes umfasst:
Bestimmen des Komprimierungsparameters der eingestellten versteckten Schicht, basierend auf einer Verlustbeziehung und dem Gesamtkomprimierungszielparameter des Modells;

wobei, wenn der Komprimierungsparameter die Pruning-Zahl ist, umfasst die Verlustbeziehung eine Beziehung zwischen der Pruning-Zahl der jeweiligen Kanäle jeder versteckten Schicht in der eingestellten versteckten Schicht in dem Modell und einem entsprechenden gewichteten Pruning-Verlust jeder versteckten Schicht in der eingestellten versteckten Schicht, wobei der gewichtete Pruning-Verlust ein Produkt von Gewichten jeder versteckten Schicht und dem Pruning-Verlust jeder versteckten Schicht ist; und
wenn der Komprimierungsparameter die Pruning-Zahl und eine Quantisierungsrate umfasst, dann umfasst die Verlustbeziehung eine Beziehung zwischen der Pruning-Zahl der jeweiligen Kanäle jeder versteckten Schicht in der eingestellten versteckten Schicht und einem entsprechenden gewichteten Pruning-Verlust jeder versteckten Schicht der eingestellten versteckten Schicht, und eine Beziehung zwischen den jeweiligen Kandidatenquantisierungsraten jeder versteckten Schicht in der eingestellten versteckten Schicht und einem entsprechenden gewichteten Quantisierungsverlust jeder versteckten Schicht, wobei der gewichtete Pruning-Verlust ein Produkt der Gewichte jeder versteckten Schicht und des Pruning-Verlustes jeder versteckten Schicht ist und der gewichtete Quantisierungsverlust ein Produkt der Gewichte jeder versteckten Schicht und eines Quantisierungsverlustes jeder versteckten Schicht ist.

12. Verfahren nach Anspruch 11, wobei der Gesamtkomprimierungszielparameter mindestens eines von einer Gesamtkomprimierungsrate des Modells oder einem Gesamtverlust des Modells umfasst.

13. Elektronische Vorrichtung (2000), umfassend:

eine Eingabeschnittstelle (2010);
eine Ausgabeschnittstelle (2040);
mindestens einen Prozessor (2020); und
einen Speicher (2030), der mindestens eine Instruktion speichert,
wobei die Eingabeschnittstelle (2010) so konfiguriert ist, dass sie ein Maschinenlernmodell empfängt, das durch ein vorrichtungsinternes Verfahren komprimiert werden soll,
wobei der mindestens eine Prozessor durch Ausführen der mindestens einen Instruktion konfiguriert ist zum

Bestimmen einer Pruning-Zahl für jeden einer Vielzahl von Kanälen, die in einer eingestellten versteckten Schicht des Maschinenlernmodells enthalten sind, wobei das Maschinenlernmodell eine Vielzahl von versteckten Schichten umfasst, die die eingestellte versteckte Schicht umfassen, und die eingestellte versteckte Schicht eine oder mehrere versteckte Schichten umfasst, die in entsprechenden versteckten Schichten eingestellt sind;
Bestimmen eines Pruning-Verlustes jeder versteckten Schicht in der eingestellten versteckten Schicht basierend auf der bestimmten Pruning-Zahl der jeweiligen Kanäle, die in jeder versteckten Schicht in der eingestellten versteckten Schicht enthalten sind;
Bestimmen eines Komprimierungsparameters der eingestellten versteckten Schicht im Modell;
Komprimieren des Modells basierend auf dem bestimmten Komprimierungsparameter der eingestellten versteckten Schicht,
wobei der Komprimierungsparameter mit einem Pruning des Modells zusammenhängt und eine Pruning-Zahl für jede versteckte Schicht in der eingestellten versteckten Schicht umfasst, und
wobei der Komprimierungsparameter der eingestellten versteckten Schicht basierend auf der Pruning-Zahl der jeweiligen Kanäle, die in jeder versteckten Schicht in der eingestellten versteckten Schicht enthalten sind, und dem Pruning-Verlust jeder versteckten Schicht in der eingestellten versteckten Schicht des Modells bestimmt wird,

wobei der mindestens eine Prozessor durch Ausführen der mindestens einen Instruktion konfiguriert ist zum

Bestimmen einer Beziehung zwischen der Pruning-Zahl der jeweiligen Kanäle jeder versteckten Schicht in der eingestellten versteckten Schicht und dem entsprechenden Pruning-Verlust jeder versteckten Schicht in der eingestellten versteckten Schicht;

Bestimmen der Pruning-Zahl jeder versteckten Schicht durch Lösen eines Optimierungsproblems basierend auf einem Gesamtkomprimierungsziel und der Beziehung zwischen der Pruning-Zahl der jeweiligen Kanäle jeder versteckten Schicht in der eingestellten versteckten Schicht und dem entsprechenden Pruning-Verlust jeder versteckten Schicht in der eingestellten versteckten Schicht,

wobei das Maschinenlernmodell mindestens einem von einem Szenentexterfassungsmodell, das in Szenen sichtbaren Text erfasst, oder einem Hauptpunkterfassungsmodell, das mehrere voreingestellte Hauptpositionen einer Person in einer Szene erkennt, entspricht.

14. Computerlesbares Speichermedium, das ein nichttransitorisches computerlesbares Speichermedium umfasst, das Computerprogrammcodes speichert, die, wenn sie von einem Computer ausgeführt werden, den Computer veranlassen, ein vorrichtungsinternes Verfahren zum Komprimieren eines Maschinenlernmodells nach Anspruch 1 durchzuführen.

**Revendications**

1. Procédé sur dispositif de compression d'un modèle d'apprentissage automatique par un dispositif électronique, comprenant :

déterminer un nombre de pruning pour chacun d'une pluralité de canaux inclus dans une couche cachée définie du modèle d'apprentissage automatique, le modèle d'apprentissage automatique comprend un réseau neuronal convolutif qui comporte une pluralité de couches cachées comprenant la couche cachée définie, la couche cachée définie comprenant une ou plusieurs couches cachées définies dans des couches cachées respectives ; déterminer une perte de pruning de chaque couche cachée dans la couche cachée définie en se basant sur le nombre de pruning déterminé des canaux respectifs inclus dans chaque couche cachée dans la couche cachée définie ;

déterminer un paramètre de compression de la couche cachée définie dans le modèle ;

comprimer le modèle en se basant sur le paramètre de compression déterminé de la couche cachée définie, dans lequel le paramètre de compression est lié à un pruning du modèle et comprend un nombre de pruning de chaque couche cachée dans la couche cachée définie, et

dans lequel la détermination du paramètre de compression de la couche cachée définie dans le modèle est basée sur le nombre de pruning des canaux respectifs compris dans chaque couche cachée dans la couche cachée définie et la perte de pruning de chaque couche cachée dans la couche cachée définie du modèle, la détermination du paramètre de compression de la couche cachée définie comprenant :

déterminer une relation entre le nombre de pruning des canaux respectifs de chaque couche cachée dans la couche cachée définie et la perte de pruning correspondante de chaque couche cachée dans la couche cachée définie ; et

déterminer le nombre de pruning de chaque couche cachée, en résolvant un problème d'optimisation basé sur un objectif de compression global et la relation entre le nombre de pruning des canaux respectifs de chaque couche cachée dans la couche cachée définie et la perte de pruning correspondante de chaque couche cachée dans la couche cachée définie,

dans lequel le modèle d'apprentissage automatique correspond à au moins un d'un modèle de détection de texte de scène qui détecte le texte visible dans les scènes ou d'un modèle de détection de points clés qui détecte plusieurs positions clés prédéfinies d'une personne dans une scène.

2. Procédé sur dispositif de la revendication 1, dans lequel la détermination de la relation entre le nombre de pruning des canaux respectifs de chaque couche cachée dans la couche cachée définie et la perte de pruning correspondante de chaque couche cachée dans la couche cachée définie, comprenant :

déterminer une relation entre le nombre de pruning des canaux respectifs d'une couche cachée actuelle et la perte de pruning correspondante de la couche cachée actuelle, en se basant sur les données d'apprentissage d'au moins une couche cachée suivante à la couche cachée actuelle ;

dans lequel les données d'apprentissage comprennent une relation entre un canal de sortie de l'au moins une couche cachée suivante et chaque canal d'entrée de l'au moins une couche cachée suivante.

3. Procédé sur dispositif de la revendication 1, dans lequel la détermination du nombre de pruning de chaque couche cachée, basée sur la relation entre le nombre de pruning des canaux respectifs de chaque couche cachée dans la couche cachée définie et la perte de pruning correspondante de chaque couche cachée dans la couche cachée définie, comprenant :

déterminer le nombre de pruning de chaque couche cachée, en se basant sur une relation entre le nombre de pruning des canaux respectifs de chaque couche cachée dans la couche cachée définie et la perte de pruning correspondante de chaque couche cachée dans la couche cachée définie, et un poids correspondant à chaque couche cachée dans la couche cachée définie.

4. Procédé sur dispositif de la revendication 3, dans lequel la détermination du nombre de pruning de chaque couche cachée, basée sur la relation entre le nombre de pruning des canaux respectifs de chaque couche cachée dans la couche cachée définie et la perte de pruning correspondante de chaque couche cachée dans la couche cachée définie, et le poids correspondant à chaque couche cachée, comprenant :

déterminer une relation entre le nombre de pruning des canaux respectifs de chaque couche cachée et une perte de pruning pondérée correspondante de chaque couche cachée, en se basant sur la relation entre le nombre de pruning des canaux respectifs de chaque couche cachée et la perte de pruning correspondante de chaque couche cachée, et sur le poids correspondant à chaque couche cachée ; et
déterminer le nombre de pruning de chaque couche cachée, en se basant sur la relation entre le nombre de pruning des canaux respectifs de chaque couche cachée et la perte de pruning pondérée correspondante de chaque couche cachée.

5. Procédé sur dispositif de la revendication 1, dans lequel la détermination de la relation entre le nombre de pruning des canaux respectifs de chaque couche cachée et la perte de pruning correspondante de chaque couche cachée, comprenant :

calculer, de manière incrémentale ou décroissante, la perte de pruning de chaque canal candidat actuel à élaguer, respectivement,

dans lequel la manière incrémentale comprend tout canal candidat actuel à élaguer comprenant un nombre de pruning qui comprend les nombres de pruning de chacun des canaux élagués déterminés par un nombre de pruning de canal précédent et au moins un canal non élagué, et
dans lequel la manière décroissante comprend tout canal candidat actuel à élaguer comprenant un nombre de pruning qui correspond aux canaux élagués restants après avoir supprimé au moins un canal des canaux élagués déterminés par un nombre de pruning de canal précédent ; et

déterminer un canal candidat actuel à élaguer avec une perte de pruning minimale en tant que canal élagué correspondant au canal actuel déterminé par le nombre de pruning de canal précédent, afin d'obtenir la relation entre le nombre de pruning de canal actuel et la perte de pruning correspondante de chaque couche cachée dans la couche cachée définie.

6. Procédé sur dispositif de la revendication 1, dans lequel le paramètre de compression comprend un taux de quantification, et
dans lequel la détermination du paramètre de compression de la couche cachée définie dans le modèle comprend :

déterminer une relation entre les taux de quantification candidats respectifs de chaque couche cachée dans la couche cachée définie et la perte de quantification correspondante de chaque couche cachée ; et
déterminer un taux de quantification de chaque couche cachée en se basant sur la relation entre les taux de quantification candidats respectifs de chaque couche cachée et la perte de quantification correspondante de chaque couche cachée.

7. Procédé sur dispositif de la revendication 6, dans lequel la détermination de la relation entre les taux de quantification candidats respectifs de chaque couche cachée et la perte de quantification correspondante de chaque couche cachée, comprenant :

déterminer la relation entre les taux de quantification candidats respectifs de chaque couche cachée et la perte de quantification correspondante de chaque couche cachée, en se basant sur les données d'apprentissage d'une couche cachée actuelle ; et

dans lequel les données d'apprentissage de la couche cachée actuelle comprennent une relation entre un canal de sortie de la couche cachée actuelle et chaque canal d'entrée de la couche cachée actuelle.

**8.** Procédé sur dispositif de la revendication 6, dans lequel la détermination du taux de quantification de chaque couche cachée basée sur la relation entre les taux de quantification candidats respectifs de chaque couche cachée et la perte de quantification correspondante de chaque couche cachée, comprenant :

déterminer le taux de quantification de chaque couche cachée en se basant sur une relation entre les taux de quantification candidats respectifs de chaque couche cachée et la perte de quantification correspondante de chaque couche cachée, et un poids correspondant à chaque couche cachée.

**9.** Procédé sur dispositif de la revendication 8, dans lequel la détermination du taux de quantification de chaque couche cachée basée sur la relation entre les taux de quantification candidats respectifs de chaque couche cachée et la perte de quantification correspondante de chaque couche cachée, et le poids correspondant à chaque couche cachée, comprenant :

déterminer une relation entre les taux de quantification candidats respectifs de chaque couche cachée et une perte de quantification pondérée correspondante de chaque couche cachée, en se basant sur la relation entre les taux de quantification candidats respectifs de chaque couche cachée et la perte de quantification correspondante, et le poids correspondant à chaque couche cachée ; et

déterminer le taux de quantification de chaque couche cachée, en se basant sur la relation entre les taux de quantification candidats respectifs de chaque couche cachée et la perte de quantification pondérée correspondante de chaque couche cachée.

**10.** Procédé sur dispositif de la revendication 3, dans lequel

si une couche cachée actuelle correspond biunivoquement à une couche cachée suivante, le poids de la couche cachée actuelle est le même que le poids de la couche cachée suivante ;

si la couche cachée actuelle correspond à au moins deux couches cachées suivantes par une structure à sorties multiples, le poids de la couche cachée actuelle est la somme des poids d'au moins deux couches cachées suivantes ; et

si au moins deux couches cachées actuelles correspondent à une couche cachée suivante par une structure à entrées multiples, le poids de chaque couche cachée actuelle est le poids de la couche cachée suivante attribué en fonction d'une proportion de canal de chaque couche cachée actuelle.

**11.** Procédé sur dispositif de la revendication 1, dans lequel la détermination du paramètre de compression de la couche cachée définie dans le modèle comprend :

déterminer le paramètre de compression de la couche cachée définie, en se basant sur une relation de perte et le paramètre cible de compression globale du modèle ;

dans lequel, si le paramètre de compression est le nombre de pruning, la relation de perte comprend une relation entre le nombre de pruning des canaux respectifs de chaque couche cachée dans la couche cachée définie du modèle et une perte de pruning pondérée correspondante de chaque couche cachée dans la couche cachée définie, la perte de pruning pondérée étant un produit des poids de chaque couche cachée et de la perte de pruning de chaque couche cachée ; et

si le paramètre de compression comprend le nombre de pruning et un taux de quantification, la relation de perte comprend une relation entre le nombre de pruning des canaux respectifs de chaque couche cachée dans la couche cachée définie et une perte de pruning pondérée correspondante de chaque couche cachée dans la couche cachée définie, et une relation entre les taux de quantification candidats respectifs de chaque couche cachée dans la couche cachée définie et une perte de quantification pondérée correspondante de chaque couche cachée, la perte de pruning pondérée étant un produit des poids de chaque couche cachée et de la perte de pruning de chaque couche cachée, et la perte de quantification pondérée étant un produit des poids de chaque couche cachée et d'une perte de quantification de chaque couche cachée.

**12.** Procédé sur dispositif de la revendication 11, dans lequel le paramètre cible de compression globale comprend au moins un d'un taux de compression globale du modèle ou d'une perte globale du modèle.

**13.** Dispositif électronique (2000), comprenant :

une interface d'entrée (2010) ;
une interface de sortie (2040) ;
au moins un processeur (2020) ; et
une mémoire (2030) stockant au moins une instruction,
dans lequel l'interface d'entrée (2010) est configurée pour recevoir un modèle d'apprentissage automatique à compresser par un procédé sur dispositif,
dans lequel l'au moins un processeur est configuré pour, en exécutant l'au moins une instruction,

déterminer un nombre de pruning pour chacun d'une pluralité de canaux inclus dans une couche cachée définie du modèle d'apprentissage automatique, le modèle d'apprentissage automatique comprenant une pluralité de couches cachées incluant la couche cachée définie et la couche cachée définie comprenant une ou plusieurs couches cachées définies dans des couches cachées respectives ;
déterminer une perte de pruning de chaque couche cachée dans la couche cachée définie en se basant sur le nombre de pruning déterminé des canaux respectifs inclus dans chaque couche cachée dans la couche cachée définie ;
déterminer un paramètre de compression de la couche cachée définie dans le modèle ;
comprimer le modèle en se basant sur le paramètre de compression déterminé de la couche cachée définie,
dans lequel le paramètre de compression est lié à un pruning du modèle et comprend un nombre de pruning de chaque couche cachée dans la couche cachée définie, et
dans lequel le paramètre de compression de la couche cachée définie est déterminé en se basant sur le nombre de pruning des canaux respectifs inclus dans chaque couche cachée de la couche cachée définie et sur la perte de pruning de chaque couche cachée de la couche cachée définie du modèle,

dans lequel l'au moins un processeur est configuré pour, en exécutant l'au moins une instruction,

déterminer une relation entre le nombre de pruning des canaux respectifs de chaque couche cachée dans la couche cachée définie et la perte de pruning correspondante de chaque couche cachée dans la couche cachée définie ;
déterminer le nombre de pruning de chaque couche cachée, en résolvant un problème d'optimisation basé sur un objectif de compression global et la relation entre le nombre de pruning des canaux respectifs de chaque couche cachée dans la couche cachée définie et la perte de pruning correspondante de chaque couche cachée dans la couche cachée définie,
dans lequel le modèle d'apprentissage automatique correspond à au moins un d'un modèle de détection de texte de scène qui détecte le texte visible dans les scènes ou d'un modèle de détection de points clés qui détecte plusieurs positions clés prédéfinies d'une personne dans une scène.

**14.** Support de stockage lisible par ordinateur comprenant un support de stockage non transitoire lisible par ordinateur stockant des codes de programme informatique qui, lorsqu'ils sont exécutés par un ordinateur, amènent l'ordinateur à exécuter un procédé sur dispositif pour compresser un modèle d'apprentissage automatique de la revendication 1.

[Fig. 1A]

| Determining a compression parameter of a set hidden layer in a machine learning model | S101 |

| Compressing the model to be optimized based on the compression parameter of the set hidden layer | S102 |

[Fig. 1B]

S101

| determining a relationship between a pruning number of respective channels of each hidden layer and a corresponding pruning loss in a set hidden layer | S1011 |

| determining the pruning number of each hidden layer according to the relationship between the pruning number of respective channels of each hidden layer and corresponding pruning loss | S1012 |

[Fig. 2A]

Filter $W_{i,1}$

Filter $W_{i,2}$

Filter $W_{i,3}$

Filter $W_{i,4}$

Filter $W_{i,5}$

$H_i$

$W_i$

Input : $c_i = $ 4 feature maps

$H_{i+1}$

$W_{i+1}$

Output : $c_{i+1} = $ 5 feature maps

[Fig. 2B]

[Fig. 2C]

5 filters, each filter having 4 kernels

4 filters, each filter having 5 kernels

$c_{i+1}$

222

$H_i$

$W_i$

$c_i$

Input : $c_i$ = 4 feature maps

224

$H_{i+1}$

$W_{i+1}$

$c_{i+1}$

Output : $c_{i+1}$ = 5 feature maps

$c_{i+1}$

$c_{i+1}$

226

$H_{i+2}$

$W_{i+2}$

Output : $c_{i+2}$ = 4 feature maps

44

[Fig. 2D]

[Fig. 3]

[Fig. 4]

[Fig. 5]

[Fig. 6]

[Fig. 7]

[Fig. 8]

Training data

Overall compression target

Calculate the pruning number per layer

Data sampling — S802

Multi-branch compatible data allocation — S804

Training data in Layer 1    · · ·    Training data in Layer n

Calculate weight of each layer — S806

Calculate the relationship map of the pruning number and pruning loss in Layer 1    · · ·    Calculate the relationship map of the pruning number and pruning loss in Layer n — S808

Calculate the relationship map of the pruning number and weighted pruning loss in Layer 1    · · ·    Calculate the relationship map of the pruning number and weighted pruning loss in Layer n — S810

Solve optimization problem — S812

Pruning number

EP 3 903 240 B1

47

[Fig. 9A]

S101

determining a relationship between each pruning
number of each hidden layer in a set hidden layer
and a corresponding pruning loss, and determining a
relationship between respective candidate quantization
rates of each hidden layer in the set hidden layer
and a corresponding quantization loss

S1013

determining the pruning number and the quantization
loss of each hidden layer based on the relationship
between the pruning number of respective channels
of each hidden layer and the corresponding pruning
loss and the determined relationship between respective
candidate quantization rates of each hidden layer
and the corresponding quantization loss

S1014

[Fig. 9B]

Training data

Data sampling — S802

Calculate compression parameter
(pruning number and quantization rate) of each layer

Multi-branch compatible data allocation — S804

Collect quantitation-related training data — S902

S904

Training data in Layer 1 · · · Training data in Layer n

S806
Calculate weight
of each layer

Training data in Layer 1 · · · Training data in Layer n

Calculate the relationship map
of the pruning number and
pruning loss in Layer 1

Calculate the relationship map
of the pruning number and
pruning loss in Layer 1 — S808

S906 — Calculate relationship map
of quantization rate and
quantization loss in Layer 1

Calculate the relationship map
of quantization rate and
quantization loss in Layer n

Calculate the relationship map
of the pruning number and
weighted pruning loss in Layer 1

Calculate the relationship map
of the pruning number and
weighted pruning loss in Layer n — S810

S908 — Calculate the relationship map
of quantization rate and weighted
quantization loss in Layer 1

Calculate the relationship map
of quantization rate and weighted
quantization loss in Layer n

Overall compression
target

Solve optimization problem — S910

Pruning number          Quantization rate

EP 3 903 240 B1

49

[Fig. 10]

| Splitting channels of each hidden layer in a set hidden layer of the model to be compressed into at least two groups of sub-channels, and determining a network parameter of each group of sub-channels, wherein each group of sub-channels includes corresponding input channels and output channels after grouping | S201 |

| Adding a combination layer to obtain a group compressed model, wherein the input of the combinationlayer is connected to the output channel of each group of sub-channels | S202 |

[Fig. 11]

[Fig. 12]

Kernel
Prunning :

Group
Prunning :

Concatenate

[Fig. 13A]

S201

determining a contribution between each pair of input
channels and output channels of each hidden
layer in the set hidden layer

S2011

determining a splitting manner with minimum loss for
splitting the channels of each hidden layer into at least two
groups of sub-channels, according to the contribution between
each pair of input channels and the output channels, and
splitting the channels of each hidden layer into at least two
groups of sub-channels according to the splitting manner

S2012

[Fig. 13B]

[Fig. 14]

[Fig. 15]

Output channel

Input channel

[Fig. 16]

Loss = 0.4

G = (V,E,w)

Graph
Theory

Min-split
problem

Loss = 0.3

Optimal
solution

Loss = 0.35

[Fig. 17]

[Fig. 18]

[Fig. 19]

[Fig. 20]

_2000_

| | | |
|---|---|---|
| _2010_ | _2020_ | _2040_ |
| INPUT INTERFACE | PROCESSOR | OUTPUT INTERFACE |

_2030_

MEMORY

[Fig. 21]

_2100_

Model optimization module

Determining module ── 2110

Compression module ── 2120

[Fig. 22]

_2200_

Group compression module

Group compression module ── 2210

Adding module ── 2220

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.-H. LUO** ; **J. WU** ; **W. LIN**. ThiNet: A Filter Level Pruning Method for Deep Neural Network Compression. *2017 IEEE International Conference on Computer Vision (ICCV)*, 2017, 5068-5076